(19)
Europäisches Patentamt
European Patent Office
Office européen des brevets

(11) Numéro de publication : **0 426 822 B1**


(12) # FASCICULE DE BREVET EUROPEEN


(45) Date de publication du fascicule du brevet : **11.08.93 Bulletin 93/32**

(51) Int. Cl.$^5$ : **F16L 11/16**

(21) Numéro de dépôt : **90908565.6**

(22) Date de dépôt : **22.05.90**

(86) Numéro de dépôt international : **PCT/FR90/00361**

(87) Numéro de publication internationale : **WO 90/14543 29.11.90 Gazette 90/27**


(54) **CONDUITE FLEXIBLE COMPORTANT UN MATERIAU COMPOSITE A MATRICE EN ALLIAGE D'ALUMINIUM ET PROCEDE DE FABRICATION DUDIT MATERIAU.**


(30) Priorité : **23.05.89 FR 8906836**

(43) Date de publication de la demande : **15.05.91 Bulletin 91/20**

(45) Mention de la délivrance du brevet : **11.08.93 Bulletin 93/32**

(84) Etats contractants désignés : **BE DE ES FR GB IT NL SE**


(56) Documents cités :
**EP-A- 0 045 632**
**EP-A- 0 147 288**
**EP-A- 0 148 061**
**WO-A-89/11057**
**FR-A- 2 467 347**
**FR-A- 2 528 733**
**GB-A- 2 163 514**


(73) Titulaire : **INSTITUT FRANCAIS DU PETROLE**
**4, Avenue de Bois Préau**
**F-92502 Rueil-Malmaison (FR)**
Titulaire : **COFLEXIP**
**23 Avenue de Neuilly**
**F-75116 Paris (FR)**

(72) Inventeur : **SUGIER, André**
**34, avenue de la Châtaigneraie**
**F-92500 Rueil-Malmaison (FR)**
Inventeur : **MALLEN HERRERO, José**
**29, boulevard des Batignolles**
**F-75008 Paris (FR)**

(74) Mandataire : **Andreeff, François et al**
**INSTITUT FRANCAIS DU PETROLE 4, avenue de Bois-Préau**
**F-92502 Rueil-Malmaison (FR)**


**EP 0 426 822 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne une nouvelle structure de conduite flexible présentant un allégement de poids relativement aux tubes de l'art antérieur tout en conservant des performances notamment mécaniques correctes.

L'invention s'applique, notamment, à la réalisation de conduites flexibles de transport de fluides sous pression, tels que de l'eau ou des hydrocarbures.

Pour de nombreuses applications de telles conduites, il est souvent souhaitable et parfois nécessaire de disposer de flexibles allégés, et de flexibles présentant aussi une trés bonne résistance à l'usure par frottement, notamment pour les applications en mer profonde.

Les flexibles selon certaines variantes de réalisation suivant la présente invention peuvent être, notamment, posés en mer à de grandes profondeurs d'eau.

En effet, l'un des problèmes rencontré lors de la pose de tels flexibles en grande profondeur d'eau, résulte du poids du flexible suspendu.

La contrainte dans le flexible résultant du poids, augmente au fur et à mesure que l'on se rapproche de la surface de l'eau en partant du fond.

Ainsi, c'est au niveau des moyens de maintien du flexible en surface que l'on rencontre les plus grandes contraintes dans le flexible.

L'un des moyens pour réduire cette contrainte, est d'alléger le poids du flexible tout en maintenant sensiblement ses performances mécaniques, c'est ce que propose la présente invention.

Les flexibles auxquels s'applique notamment la présente invention, peuvent comprendre au moins l'un des quatre composants suivants, dont chacun peut comporter un ou plusieurs éléments allongés, tel un profilé, un câble, un fils ou un feuillard :

- une carcasse interne constituée d'un feuillard agrafé ou de fils agrafés ou emboîtés,
- une armure de renfort,
- une voûte de renfort comportant un élément allongé profilé, et
- une carcasse externe constituée d'un feuillard ou de fils agrafés ou emboîtés.

Bien entendu, de préférence, ces éléments allongés peuvent être enroulés hélicoïdalement pour former le tube flexible que ce soit avec ou sans gaine plastique.

On connaît par le document GB-A-2 169 514, un flexible comportant des fils en alliage d'aluminium. Mais ces fils noyés dans une matière en polymère forment une couche destinée à comprimer une gaine interne afind'éviter le gonflement de celle-ci en présence d'hydrocarbures. Ces fils ne peuvent pas constituer l'un des quatre composants de la présente invention.

La présente invention concerne, d'une façon générale, tous les flexibles comportant une armature métallique qui sont utilisés dans des conditions telles que le poids de cette armature crée des difficultés et tous les flexibles utilisés en dynamique et où les problèmes d'usure liés au frottement d'une couche métallique sur une autre couche métallique peuvent conduire à une usure des dits éléments et donc à une durée d'utilisation réduite du flexible.

Plus spécifiquement, les flexibles dont les conditions d'utilisation sont limitées par la densité du matériau métallurgique constituant les éléments d'armature, généralement de l'acier, du fait que, si on augmente la section de ces éléments dans le but d'augmenter la résistance mécanique du flexible, il en résulte une augmentation du poids du flexible, et, par conséquent, une augmentation des efforts appliqués au flexible et en fonction desquels sont dimensionnés les éléments constituant l'armature.

C'est ainsi qu'une application extrêmement intéressante pour l'invention concerne les canalisations flexibles destinées à la production pétrolière sous marine par profondeur d'eau moyenne ou importante, qui comprennent d'une part les canalisations assurant la liaison entre le fond sous marin et la surface (généralement désignées par le terme anglo-saxon de Risers), et, d'autre part, les canalisations qui doivent être posées au fonds depuis la surface, pour assurer la liaison (sur une distance qui peut varier considérablement selon les cas), par exemple, entre une tête de puits sous marine et l'extrémité inférieure du "riser", ou encore un organe de raccordement ("manifold") entre plusieurs conduites et qui constitue l'"embase" du "riser".

De telles canalisations sont utilisées pour transporter sous pression très élevée (par exemple 500 bar) le pétrole brut ou le gaz produit par le puits sous-marin, ou pour transporter du gaz ou de l'eau injecté sous pression dans la formation productrice, ou pour expédier à terre ou transporter jusqu'aux installations de collecte et d'expédition (postes de chargement offshore par exemple) le pétrole ou le gaz préalablement traité à bord de la plateforme de production, ou encore pour assurer les fonctions de contrôle des têtes de puits sous-marines (lignes hydrauliques ou électriques, dites "ombilicaux").

Dans l'état actuel de la technique, tous les flexibles connus utilisés ou utilisables pour les applications décrites ci-dessus pour lesquels les diamètres intérieurs peuvent varier par exemple entre environ 1" (2,54 cm) et environ 20" (50,8 cm), et pour les applications les plus courantes, entre 3" (7,62 cm) et 10" (25,4 cm) ou 12" (30,48 cm)- sont réalisés à partir d'éléments d'armature exclusivement en acier (aciers au carbone, aciers inoxydables, aciers alliés).

Lorsque la profondeur d'eau dans laquelle doivent être installés les flexibles reste relativement limitée, de l'ordre de 100 m à 200 ou 300 m (ce qui correspond, encore aujourd'hui, aux cas les plus fréquents dans l'état actuel du marché), la valeur de la profondeur d'eau ne joue pas un rôle essentiel en tant que paramètre de dimensionnement de la structure du flexible, qui est principalement conditionné par la valeur maximale envisagée pour la pression interne.

Par contre, déjà maintenant, certains champs pétroliers sous-marins sont mis en production dans des profondeurs d'eau se situant dans la gamme de 500 à 800 m, et la tendance à opérer dans les profondeurs d'eau plus importantes se confirme, avec divers projets dépassant les 1000 m d'eau.

Or, dans l'état actuel de la technique, les caractéristiques des flexibles à armure en acier qui sont les seuls actuellement disponibles pour les appplications en question sont telles que :

- à partir d'une profondeur d'eau qui peut varier, selon les cas, de 400 m à 700 m environ, il est nécessaire de prendre des dispositions particulières qui ont une incidence importante sur les coûts, en renforcement la structure métallique de flexible et/ou en utilisant des procédures et des équipements spéciaux pour la mise en place sur le site,
- les limites ultimes de profondeur d'eau que l'on peut atteindre avec ces flexibles actuellement connus peuvent être estimées de l'ordre de 600 m à 1000 m, ou au maximum, un peu plus de 1000 m pour les diamètres inférieurs à 6, la limite variant selon les cas en fonction du diamètre du flexible, de la pression maximale de service, et des divers autres paramètres ayant une influence sur le dimensionnement du flexible (tels que les caractéristiques du fluide transporté, ainsi que les conditions d'environnement et les conditions de réalisation de l'opération de pose).

Donc, un besoin pour une solution technique nouvelle existe déjà et va devenir de plus en plus important.

D'une façon plus générale, l'invention trouve une application dans tous les cas où le poids des flexibles actuellement disponibles crée des contraintes à l'utilisateur. Ainsi, par exemple, les flexibles à haute pression utilisés sur les chantiers de forage pétrolier, tels que flexibles d'injection (rotary hose), lignes de contrôle du puits (kill line, choke line), dont la mise en oeuvre et la manipulation peuvent être facilitées si on dispose de flexibles moins lourds.

L'invention peut trouver une autre application intéressante dans les flexibles flottants, qui sont utilisés, en particulier, dans les installations de chargement/déchargement en mer pour relier une bouée ancrée au large et un tanker amarré à la bouée. L'allégement de la structure résultant de l'utilisation de composite à matrice en alliage d'aluminium permet en effet de réduire sensiblement l'importance des bouées ou autres organes de flottabilité qu'il faut ajouter au flexible pour le rendre flottant et qui présentent divers inconvénients (coût, encombrement, prise au courant et au vent).

L'invention permettant la réalisation de flexibles à haute résistance mécanique et de poids réduit peut également trouver une application dans l'aéronautique ou l'espace.

L'utilisation de composite à matrice en alliage d'aluminium à la place d'acier dans les conditions que permet l'invention est, par ailleurs, trés avantageuse pour diverses applications particulières, par exemple pour réaliser les carcasses en "feuillard agrafé" installées dans certains cas à titre de protection mécanique, à l'extérieur du flexible par roulement du feuillard agrafé autour de la gaine plastique extérieure.

Par ailleurs, dans certains cas, le remplacement de l'acier (quel que soit le type d'acier envisagé) par un composite à matrice en alliage d'aluminium peut procurer des avantages intéressants. Ainsi, par exemple, la carcasse intérieure dont sont munis certains flexibles, notamment ceux destinés au transport de pétrole brut de gisement (flexihles "rough bore") étant soumise à l'action corrosive du fluide transporté, l'utilisation de composite à matrice en alliage d'aluminium peut dans certains cas, permettre de réaliser une économie par rapport au coût des aciers inoxydables qui seraient nécessaires.

En outre, l'utilisation de composite à matrice en alliage d'aluminium peut s'avérer intéressante dans certains cas où existe un risque de pollution du fluide transporté par le matériau constituant la paroi interne du flexible, ce qui exclurait l'utilisation de l'acier (ou, au moins, de l'acier au carbone, indépendamment des aciers inoxydables qui pourraient être utilisés, éventuellement, mais seraient beaucoup plus coûteux), ainsi, par exemple, dans le cas des aqueducs, ou des canalisations transportant certains produits chimiques.

D'autres cas peuvent encore se présenter où certaines propriétés du composite à matrice en alliage d'aluminium constituent un avantage par rapport à l'acier et créer ainsi une application possible intéressante pour l'invention, par exemple la propriété d'amagnétisme de composite à matrice en alliage d'aluminium.

Les flexibles selon la présente invention peuvent être employés dans des installations aériennes, tel par exemple pour les lignes de transfert de fluide, notamment en zone froide ou pour le transfert de fluide froid. En effet, ils présentent une bonne tenue au choc à basse température, alors que des aciers courant cassent par résilience dans les températures voisines de - 20°C.

Pour ce type d'application, les flexibles selon la présente invention pourront comporter du composite à matrice en alliage d'aluminium, pour tous les composants du flexible (carcase, voûte, armure) ou uniquement pour ceux exposés aux températures voisines ou inférieures à - 20°C.

En résumé, l'invention peut trouver une application dans tous les cas où, d'une part, le composite à matrice en alliage d'aluminium présente un avantage par rapport à l'acier (légereté, résistance à l'usure, à l'abrasion, résistance aux effets de corrosion...) et, d'autre part, où les sollicitations mécaniques relativement importantes appliquées au flexible (pression interne, pression extérieure, effet d'écrasement, charge axiale...) nécessitent d'utiliser comme élément d'armature des produits (tréfilé, fils, câble, feuillard) offrant une résistance mécanique élevée comparable à celle que l'on peut obtenir avec l'acier.

S'agissant de réaliser des flexibles plus légers que les flexibles actuellement disponibles dont l'armature est constituée d'éléments en acier et, également, s'agissant de réaliser les armatures des flexibles avec des matériaux aptes à résister à certains effets particuliers, diverses solutions ont déjà été proposées.

Ainsi, par exemple, certaines techniques ont été développées par les déposants permettant de réaliser les fils d'armure des flexibles en matériau composite constitué de fibres noyées dans une résine plastique (FR-2.283.768, FR-2.312.356 et EP-263.860).

L'utilisation de matériaux composites à matière organique permet d'aller encore plus loin dans l'allègement des structures de flexibles, et, en particulier dans le cas des applications en mer profonde exposées ci-dessus, de rendre possible l'exploitation de champs sous-marins par des profondeurs d'eau extrêmement importantes. Mais, ces matériaux composites à matrice organique sont relativement très coûteux, et par comparaison, le composite à matrice en alliage d'aluminium est beaucoup plus économique.

Il a été établi que l'utilisation de composite à matrice en alliage d'aluminium en application de l'invention doit permettre, dans le cas des applications aux canalisations de production pétrolière sous-marines exposées ci-dessus, de réaliser des installations dans des profondeurs d'eau pouvant atteindre et dépasser 1500 m, ce qui permet d'envisager pour les composites à matrice d'aluminium dans les applications visées ci-dessus, un marché très important, au-delà des limites permises par l'acier.

La présente invention propose une sélection et des traitements de composite à matrice en alliage d'aluminium et une structure de tube flexible qui permettent d'alléger considérablement le poids du flexible tout en aboutissant à des produits utilisables et parfaitement performants.

L'invention concerne plus particulièrement les divers éléments d'armature métallique des flexibles utilisables dans les applications décrites ci-dessus.

Les composites à matrice en alliage d'aluminium qui sont mis en oeuvre pour la fabrication des flexibles objets de la présente invention sont constitués par une matrice d'un alliage d'aluminium des séries 2000, 3000, 5000, 6000 et 8000 renforcés par des particules ou par des whiskers.(Les whiskers peuvent être considérés comme des fibres courtes et discontinues d'un diamètre de 0,1 à 10 μm et d'une longueur de 10 à 600 μm, ces whiskers peuvent être utilisés en mélange avec des particules).

Les particules de renfort utilisées sont essentiellement des particules de graphite, d'alumine et de carbure de silicium de taille comprise entre 5 et 400 μm et de préférence entre 10 et 200 μm.

La fraction pondérale des particules ou des whiskers utilisés est inférieur à 40% et de préférence comprise entre 3 et 25%.

Les éléments allongés à matrice en alliage d'aluminum présentent les avantages suivants :

. l'accroissement du module d'Young lequel joue un rôle important dans la résistance mécanique de certains éléments allongés du flexible,
. l'accroissement de la résistance à l'usure notamment par frottement entre fils d'une même couche ou entre fils de deux couches adjacentes,
. l'accroissement de la résistance à la traction et de la limite élastique.

L'incorporation de ces éléments de renfort peut se réaliser par brassage dans l'alliage à l'état semi pateux ou liquide entre le moment où il sort du four de fusion et où il est coulé dans une gorge pour mise en forme de section trapezoïdal d'environ 15 cm$^2$ de section. Le produit ainsi obtenu est ensuite filé à chaud entre 100 et 500°C pour obtenir soit un il cylindrique par exemple de diamètre 12mm, 16mm, 22mm, ou 26mm ou sous forme d'ébauche de la forme que l'on veut donner au produit final tel qu'il sera utilisé pour la fabrication de flexible.

On a constaté que l'opération de filage à chaud permettait de réaliser une trés bonne compacité du composite à matrice métallique et permettait de réaliser une très bonne adhérence entre les renforts particulaires et les whiskers et l'alliage d'aluminium.

Pour faciliter la bonne dispersion des éléments de renfort on peut réaliser préalablement, un dépôt à la surface de ces particules ou whiskers d'une fine pellicule de nickel ou de cuivre déposée par exemple par la méthode de dépôt chimique en solution suivant la technique utilisé pour réaliser les revêtements de nickel chimique ou par pulvérisation ou imprégnation de sels tel par exemple les formiates, les acétates, les citrates, les oxalates, les nitrates etc, par décomposition thermiques et réduction à l'état métallique.

On ne sortira pas du cadre de la présente invention en utilisant d'autres méthodes connues favorisant la dispersion et/ou l'adhérence des particules de renforts dans la matrice en alliage d'aluminium.

Aux termes de l'invention, peuvent être notamment réalisés en composite à matrice en alliage d'aluminium dans les conditions qui caractérisent l'invention, l'un ou l'autre, où n'importe quelle combinaison, des éléments d'armature de flexibles suivants :

1 - Les fils constituant l'armure dite de résistance à la traction et à l'effet de fond (cette armure pouvant également prendre en charge tout ou partie des effets de pression circonférentiels en fonction de l'angle d'armage qui peut varier, à la limite, entre quelques degrés et environ 80°, mais qui est, en général, situé entre 10 et environ 65°.)

Ces fils présentant une section qui peut être circulaire, éventuellement elliptique, ou (trés couramment) rectangulaire avec, préférentiellement, les angles arrondis (les fils étant, selon l'invention, réalisés en composite à matrice en alliage d'aluminium).

2 - Les éléments constituant l'armure de résistance à la traction et à l'effet de fond réalisés sous forme de torons ou câbles, eux-mêmes constitués par l'enroulement hélicoïdal (câblage) de fils, selon l'invention, en composite à matrice en alliage d'aluminium. Dans le cas de l'utilisation de torons ou câbles comme élément d'armure, il est courant de les disposer à l'intérieur d'une masse compacte de matériau élastomérique,

3 - Les fils constituant "l'armure de pression", dont la fonction est de résister aux effets de la pression intérieure, ainsi qu'aux effets d'écrasement (en particulier liés aux opérations de pose du flexible dans le cas des canalisations sous-marines) et aux effets de pression extérieure. Ces profilés sont, couramment, réalisés sous forme de fils de section rectangulaire, aux coins préférablement arrondis.

Il sont couramment réalisés sous forme d'une nappe ou de deux nappes de profilés de section présentant des encoches et des parties saillantes de manière à réaliser un effet d'accrochage mutuel, parfois désignés "agrafage", tels que :

. une nappe de un ou plusieurs fils de section en Z, par exemple le profil désigné couramment sous le nom de Zeta (voir, par exemple, description d'un profil de ce genre dans le brevet français FR-2.052.057 de la Chiers-TCBH),

. deux nappes de fils de section en U, les branches des U de la nappe intérieure étant dirigés dans l'extérieur de manière à s'intercaler avec les branches des U, dirigés vers l'intérieur, de la nappe externe,

. et autres dessins possibles.

Il convient de noter que l'"armure de pression" peut être réalisée par combinaison de plusieurs couches de l'un ou l'autre des types décrits ci-dessus.

Les profilés ou fils constituant l'armure de pression sont enroulés selon des angles d'environ 80 à 90° par rapport à l'axe du flexible.

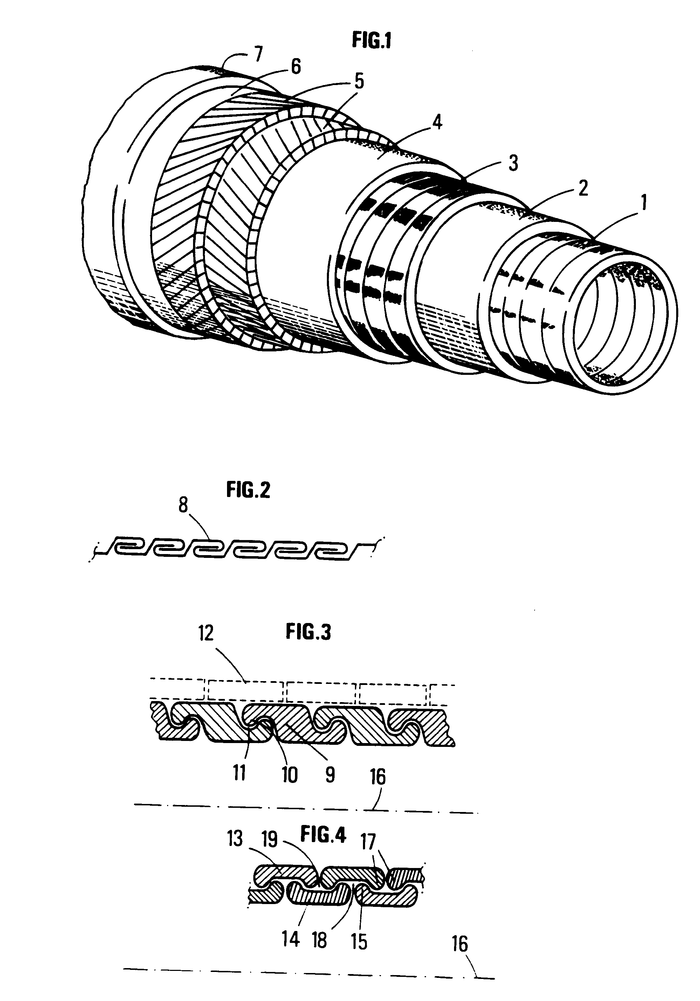

4 - Les éléments constituant la carcasse externe des flexibles et comprenant les structures réalisées par pliage d'un feuillard continu et les structures constituées par des fils agrafés ou emboîtés comme ceux décrits pour l'armure de pression (Figs 3 et 4), le pliage étant effectué de façon à réaliser, entre autre, des formes en U le long des deux bords du feuillard pour permettre l'agrafage des spires adjacentes. Le pliage peut être réalisé selon des dessins très variés.

Une forme trés connue est décrite dans la demande de brevet français EN-83/19.474 (Feuillard agrafé) qui décrit une méthode de réalisation d'un tube flexible en feuillard agrafé applicable aux flexibles selon l'invention. Ces "feuillards agrafés" sont couramment utilisés comme carcasse interne des flexibles, en particulier dans le cas du transport de pétrole brut de gisement, pour éviter l'"implosion" de la gaine plastique interne.

Ils peuvent également être utilisés comme armure de résistance à la pression, lorsqu'il sont enroulés autour de la gaine intérieure d'étanchéité.

Ces structures de feuillards agrafés ou de fils agrafés ou emboîtés peuvent aussi être utilisés comme protection extérieure du flexible.

L'élément constituant la carcasse peut également l'être par un fils agrafé ou emboîtable, tel un fils en section en Z, notamment en Zéta.

Ainsi, la présente invention concerne une conduite flexible armée comportant un ou plusieurs des composants suivants, une armure de résistance à la pression ou voûte, une armure de résistance à la traction et/ou une carcasse interne.

Elle se caractérisé en ce qu'au moins l'un desdits composants comporte un ou plusieurs éléments allongés tel un profilé, un câble, un fil ou un feuillard, ledit élément étant composé d'un matériau composite à matrice en alliage d'aluminium comportant des éléments de renforts constitués de particules et/ou de whiskers d'alumine ou de carbure de silicium utilisés à une teneur pondérale inférieur à 40%, en ce que les particules utilisées ont une taille comprise entre 4 et 400 μm, en ce que les whiskers utilisés ont un diamètre de 0,01 à 10 μm et une longueur de 10 à 600 μm, en ce que ledit élément allongé a une résistance à la rupture en traction (Rm) au moins égale à 300 MRa et de préférence au moins à 350MPa, et en ce que le module d'Young dudit élément allongé est supérieur à 75.000 MPa (7650 Kg/mm$^2$).

L'alliage d'aluminium dudit matériau pourra être des séries 2000, 5000, 3000, 6000 ou 7000 .

Ladite teneur pondérale pourra être comprise entre 3 et 25%.

On pourra utiliser des particules ayant une taille comprise entre 10 et 200 μm.

Le terme particules désigne généralement des éléments de forme sensiblement massique dont le rapport moyen entre la plus grande dimension et la plus petite est inférieur à 4. La taille d'une particule peut être définie comme étant la plus grande dimension de celle-ci.

Les whiskers utilisés pourront avoir un diamètre 0,05 à 5 μm et une longueur de 10 à 400 μm.

Lorsque la conduite selon l 'invention comporte une armure de résistance à la pression et/ou une armure de résistance à la traction, au moins l'une desdites armures pourra comporter au moins un élément allongé composé d'un composite à matrice en alliage d'aluminium dans l'une des séries 2000, 3000, 5000, 6000 ou 7000 et de préférence dans l'une des nuances suivantes : 2014, 2017, 2024, 2117, 2124, 2618, 5050, 5052, 5056, 5082, 5086, 5154, 5183, 5754, 6005, 6060, 6061, 6063, 6066, 6070, 6081, 6082, 6181, 6351, 7001, 7020, 7049, 7050, 7075, 7090, 7091, 7175, 7178 ou 7475.

Lorsque la conduite selon l'invention comporte une carcasse interne, celle-ci pourra comporter au moins un élément allongé composé d'un composite à matrice en alliage d'aluminium dans l'une des séries : 1000, 2000, 3000, 4000, 5000, 6000, 7000 et de préférence dans l'une des nuances : 1100, 1180, 3103, 5050, 5052, 5056, 5083, 5456, 6060, 6061, 6082, 6083 ou 6106.

Lorsque la conduite selon l'invention comporte une carcasse, celle-ci pourra comporter au moins un élément allongé composé d'un composite à matrice en alliage d'aluminium ayant une résistance à la rupture en traction (Rm) au moins égale à 200 MPa et de préférence au moins égale à 250 MPa et une limite élastique à 0,2 % $Re_{0,2}$ au moins égale à 150 MPa et de préférence au moins égal à 190 MPa.

Lorsque la conduite selon l' invention comporte une carcasse interne comportant au moins un élément allongé composé d'un matériau composite à matrice en alliage d'aluminium, cet élément allongé pouvant être un profilé ou un fils emboîtable ou agrafable.

L'élément allongé selon l'invention pourra être du type "Zéta".

L'élément allongé pourra avoir subi une opération de filage ou laminage à chaud.

Les éléments de renfort pourront être introduits par addition sous agitation constante dans l'alliage d'aluminium à l'état pateux ou liquide.

L'élément allongé constitué dudit matériau composite à matrice en alliage d'aluminium pourra avoir subi une opération d'écrouissage en traitement final précédée ou/et suivie d'un revenu.

L'élément allongé pourra avoir subi un écrouissage à froid ayant un taux de 3 % au moins dans le cas d'utilisation d'un alliage d'aluminium des séries 2000, 6000, 7000, ou un taux de 10 % au moins dans le cas d'utilisation d'un alliage d'aluminium de la série 5000.

L'élément allongé pourra avoir subi un écrouissage à froid ayant un taux compris entre 3 et 40 % et de préférence entre 5 et 20 % dans le cas d'utilisation d'un composite à matrice en alliage d'aluminium des séries 2000, 6000 ou 7000.

L'élément allongé pourra avoir subi un écrouissage à froid ayant un taux compris entre 20 et 90 % et de préférence entre 10 et 60 % dans le cas d'utilisation d'un composite en alliage d'aluminium de la série 5000.

L'élément allongé pourra avoir subi un laminage ou un étirage à froid.

L'élément allongé pourra avoir subi un recuit partiel ou total ou une opération de trempe revenue dont les paramètres caractéristiques sont fonction dudit taux d'écrouissage et/ou de la nature de l'alliage.

Le composant comportant le matériau composite en aluminium est recouvert d'un alliage de protection contre la corrosion.

Lorsque la conduite selon l'invention comporte une carcasse, une gaine et une armure, ladite carcasse comportant un feuillard agrafé ou un fils agrafé notamment un zéta, et ladite armure comportant un élément qui est un profilé, un câble ou fils, ledit feuillard ou fils agrafé de ladite carcasse pourra être composé d'un matériau composite à matrice en alliage d'aluminium des séries 2000, 3000, 4000, 5000, 6000 ou 7000, et/ou ledit élément allongé de ladite armure est constitué d'un matériau composite à matrice en alliage d'aluminium des séries 2000, 5000, 6000 ou 7000.

La carcasse pourra être constituée d'un feuillard ou un fils agrafé en acier ou en alliage d'aluminium, dans ce cas c'est l'armure qui sera composée d'élément allongé composé d'un matériau composite en alliage d'aluminium ou inversement.

L'armure de résistance à la traction pourra comporter essentiellement de l'acier et ladite voûte comporter essentiellement un matériau composite à matrice en alliage d'aluminium.

L'armure de résistance à la pression ou voûte pourra comporter essentiellement de l'acier et ladite armure de résistance à la traction pourra comporter essentiellement un matériau composite à matrice en alliage d'aluminium.

La conduite selon l'invention pourra comporter une gaine anti-frottement, qui semble de préférence étanche et isolante électriquement, entre la voûte et l'armure de résistance à la traction.

L'armure de résistance à la traction et ladite voûte pourront comporter essentiellement un matériau composite à matrice en alliage d'aluminium de la série 2000, 3000, 5000, 6000 ou 7000.

La conduite selon l'invention pourra comporter un feuillard externe ou du fils agrafable externe, composé éventuellement par un matériau composite à matrice en alliage d'aluminium.

La conduite selon l'invention pourra comporter une armure de résistance à la pression comportant au moins une nappe formée à partir d'un profilé ayant éventuellement une section à forme emboitable, tel un zéta, un "U", réalisé à partir d'un composite à matrice en alliage d'aluminium de la série 2000, 5000, 6000 ou 7000.

La présente invention concerne également un procédé d'élaboration d'un élément allongé composé par un matériau composite à matrice en alliage d'aluminium destiné à la fabrication d'une conduite flexible armée selon la présente invention. Selon ce procédé ledit matériau est obtenu par l'incorporation d'éléments de renfort par brassage dans un alliage d'aluminium à l'état semi-pateux ou liquide et par une opération de compactage à chaud dudit matériau composite par laminage ou filage. Cette incorporation d'éléments de renfort peut être efféctuée entre le moment où ledit alliage d'aluminium sort du four de fusion et où il est coulé dans une gorge de mise en forme.

Le produit ainsi coulé pourra être ensuite filé et/ou laminé à chaud à une température comprise entre 150 et 500°C.

Le produit coulé pourra être transformé en continue par laminage en produit de grande longueur.

Il convient de noter que dans le présent texte on pourra dans la désignation de "matériau composite à matrice en alliage d'aluminium" omettre le terme de matériau et/ou celui de matrice.

Les termes utilisés pour désignés les états métallurgiques et les traitements thermiques et mécaniques des alliages d'aluminium sont définis dans les normes NF 02 006 et NF 02 011.

A savoir, notamment :

état F : état brut de fabrication,
état O : recuit,
état H : écroui et éventuellement partiellement adouci,
état T : état durci par traitement thermique - traitement thermique considéré comme des combinaisons de tout ou partie des traitements suivants : mise en solution, trempe, maturation, revenu avec applications éventuelles de déformations plastiques.

Bien entendu, dans la présente invention, les éléments allongés pour lesquels il est proposé d'utiliser un composite à matrice en alliage d'aluminium ont généralement une fonction mécanique. Parfois, ils peuvent avoir une fonction supplémentaire du fait de leurs caractéristiques d'anticorrosion.

Les premières réalisations de prototypes ont permis de constater que la fabrication de flexibles comportant des éléments de structure en composite à matrice en alliage d'aluminium peut se faire sans difficulté particulière, par rapport aux flexibles connus à armures en acier. En particulier, nous avons trouvé que, dans le cas des profilés pleins de section relativement complexes, du type "fils de forme" tels que les fils Zéta, la fabrication de tels profilés en composite à matrice en alliage d'aluminium est plus facile et moins coûteuse que dans le cas des aciers au carbone couramment utilisés dans les flexibles de haute performance visés principalement par l'invention.

Il a également été constaté que l'utilisation de composite à matrice en alliage d'aluminium permet de fabriquer les fils ou profilés, y compris les profilés du type Zéta, sans difficulté dans des dimensions de section beaucoup plus importantes que ce qui est possible dans la pratique avec l'acier. Ceci est dû, en particulier, au fait que les fils et profilés en acier sont réalisés à partir de "fils machine" dont le diamètre est limité à environ 20 mm dans l'état actuel des équipements et des procédés de fabrication mis en oeuvre par les divers fournisseurs.

Dans ces conditions, la réalisation des fils Zéta, par exemple, est limitée à une épaisseur maximale d'environ 10 mm dans le cas de l'acier. Par contre, dans le cas de composite à matrice en alliage d'aluminium, la mesure limitative n'existe pas, du fait que les gammes de fabrication sont différentes. Nous avons pu vérifier, effectivement, que des fils Zéta peuvent être réalisés sans difficulté dans des épaisseurs pouvant atteindre 160 ou 200 mm.

L'avantage procuré par la possibilité de fabriquer des profilés en composite à matrice en alliage d'aluminium avec de fortes épaisseurs est, en particulier, de permettre de réaliser l'armure de pression avec une seule couche de fils Zéta de forte épaisseur dans les cas où, la pression interne étant élevée et le diamètre relativement important, l'épaisseur nécessaire dépasserait le maximum possible en acier. Il en résulte l'obligation de réaliser l'armure de pression en acier par superposition de deux couches de fils (par exemple une couche intérieure de fils Zéta et une couche extérieure de fils rectangulaire de frette) et une augmentation sensible du coût de fabrication que le composite à matrice en alliage d'aluminium permet d'éviter.

En outre, la possibilité de réaliser des fils Zéta de forte épaisseur, grâce au composite à matrice en alliage d'aluminium, présente dans certains cas l'avantage de pouvoir enrouler le flexible sur des rayons plus faibles sans risque de désagrafage.

La présente invention sera mieux comprise et ses avantages apparaitront plus clairement à la description qui suit d'exemples nullement limitatifs illustrés par les figures ci-annexées, parmi lesquelles :

- la figure 1 représente une structure de flexible comportant une caracasse interne agrafée en feuillard ou en fils agrafés ou emboîtables 1, une gaine d'étanchéité 2, une couche de fils agrafés ou emboîtables 3, une gaine intérieure 4, des armures 5, un ruban 6 puis une gaine extérieure 7,
- la figure 2 illustre en section, un feuillard agrafé par pliage, et
- les figures 3 et 4 montrent en section des profils emboîtables ou agrafable qui peuvent être également désignés de fils emboîtés ou agrafés.

Les exemples numérotés de 1 à 11 concernent un flexible réalisé avec la configuration représentée à la figure 1, c'est-à-dire qu'il comporte successivement une carcasse interne agrafée 1 qui peut être un feuillard agrafé par pliage ou un fil emboîté ou agrafé, ou destinée à éviter l'écrasement du tube du fait d'un effort externe qu'il soit réparti ou non, les termes utilisés par les techniciens sont "pour éviter le collapse", une gaine de rilsan 2, une couche de fil agrafé de forme zéta ou de profilé emboîtable " (Figs 3 ou 4), une gaine intérieure en rilsan 4, des armures 5 à 35° par rapport à l'axe du flexible, un ruban 6 puis une gaine extérieure en rilsan 7.

La gaine 4 peut être étanche ou non.

Les caractéristiques mécaniques sont exprimées en résistance maximale à la traction : Rm en MPa, en limite d'élasticité à 0,2 % d'allongement : Re en MPa, et en allongement % sur 50 mm : A %, E module d'Young en MPa.

Dans les tableaux donnés dans les exemples, on a successivement les colonnes suivantes :

. Numérotation des couches,
. Description, nature et dimension (en mm) des couches,
. Rm en MPa,
. Kg/m = poids en kg par mètre de flexible,
. D.i. = diamètre interne en mm,
. Ep. = épaisseur de la couche en mm,
. Le facteur de flottabilité est défini par :

$$\frac{\text{poids vide dans l'air (kg/m)}}{\text{Volume externe (l/m) X 1,02 (densité de l'eau de mer)}}$$

La charge axiale limite d'endommagement mentionnée dans les tableaux sous la rubrique "limite d'endommagement en traction", est définie dans le cas théorique d'un flexible rectiligne uniquement soumis à une force axiale de traction.

La "profondeur de pose théorique" mentionnée dans le tableau est une limite déterminée ici comme égale au quotient de la "limite

- d'un coefficient de sécurité adéquat. Dans l'état actuel de la technique, et, en particulier, en fonction de différents réglements applicables, ce coefficient de sécurité est couramment trés égal à 2,
- de divers facteurs dépendant des opérations de pose et qui ont pour effet d'augmenter les contraintes dans les éléments composant la structure du flexible par rapport au cas de référence du flexible rectiligne soumis à une charge axiale simple.

Ces facteurs de surcharge se répartissent en deux catégories :

- la manoeuvre du flexible depuis la surface induit une augmentation des contraintes à l'endroit où le flexible est pris en charge par l'équipement de pose, ce dernier pouvant être de divers types : treuil (utilisation limitée dans le cas des charges importantes associées aux grandes profondeurs d'eau), cabestan, tensionneurs à chenille (bi ou trichenille), ou tout type de treuil linéaire associé à un système de serrage du flexible pour reprendre la charge axiale, et également, en général, au moins une zone (ou simplement un support fixe en forme de gouttière incurvée) pour assurer le brassage du flexible par dessus bord.
- les efforts dynamiques déterminés par les mouvements, un support flottant utilisé pour la pose en fonction des conditions de mer limites envisagées peuvent être exprimés en terme d'accélération verticale sous la forme d'un coefficient de majoration du poids apparent.

Ainsi, comme cela a déjà été dit, l'ordre de grandeur de la profondeur d'eau maximale admissible à la pose en fonction de la limite d'endommagement sous l'effet du poids du flexible peut être évalué, à titre d'estimation sommaire, à partir de la "profondeur de pose théorique" mentionnée dans les tableaux, en divisant cette dernière par un coefficient global de réduction qui prend en compte à la fois le coefficient de sécurité et les facteurs de surcharge liés aux opérations de pose qui peuvent varier du simple au double selon les circonstances (manoeuvre du flexible par les équipements de pose et accélérations du support flottant). En pratique, le coefficient global de réduction de la charge admissible ainsi définie peut varier de peu plus de 2 dans les cas les plus favorables à un maximum pouvant dépasser 4.

Pour interpréter de façon simple et concrète les valeurs théoriques de références figurant dans les tableaux, on pourra adopter pour ce coefficient une valeur type moyenne de 3, ce qui permettra de comparer les performances respectives des différents flexibles cités en exemples, bien que la limite de profondeur d'eau ainsi déterminée n'ait, pour chaque flexible, qu'une signification très approximative en valeur absolue. Quoiqu'il en soit, les chiffres théoriques donnés dans les tableaux permettent la comparaison des différents exemples entre eux.

La "pression de collapse" mentionnée dans les tableaux correspond à la limite de résistance à l'écrasement du flexible sous l'effet de la pression hydrostatique extérieure, déterminée par la profondeur d'eau. Du fait que la structure est calculée sur la base de l'hypothèse que l'espace annulaire peut se trouver soumis à la pression extérieure (percement accidentel de la gaine extérieure par exemple) cette valeur est conditionnée par la résistance à l'écrasement de la carcasse intérieure dans le cas des flexibles du type "rough bore" qui sont décrits ici comme exemples.

On peut déterminer directement la profondeur d'eau maximale acceptable pour un flexible, du point de vue de sa résistance à la pression extérieure, en appliquant à la "pression de collapse" traduite en profondeur d'eau (pression de la colonne hydrostatique en fonction de la densité de l'eau de mer) un coefficient de sécurité de 1,5 qui correspond aux règlements actuels applicables.

L'évaluation de la profondeur d'eau maximale est acceptable pour un flexible tel que décrit dans les exemples.

La méthode d'évaluation sommaire exposée permet, au niveau des valeurs relatives, d'estimer l'ordre de grandeur des performances respectives des divers flexibles à comparer, étant entendu que la valeur absolue de la profondeur acceptable pour chacun contre eux peut varier considérablement en fonction des circonstances.

Les propriétés mécaniques indiquées pour les éléments de structure des flexibles décrits dans les exemples sont relatives à l'état dans lequel se trouvent les éléments de structure en composite à matrice en alliage d'aluminium une fois accomplie la dernière des opérations successives de traitements thermiques et/ou mécaniques spécifiées pour chaque exemple, c'est-à-dire au moment où ils vont être enroulés sur une bobine, prêts à être installés sur la machine utilisée pour la fabrication du flexible (armeuse, spiraleuse, ...).

Du fait que les divers éléments d'armature métallique des flexibles visés par l'invention sont, en général, mis en place sur le flexible de telle sorte qu'ils se trouvent dans la configuration hélicoidale imposée par la géométrie du flexible et l'angle d'armage sans avoir à subir de contrainte résiduelle sensible, c'est-à-dire qu'il sont posés et enroulés par déformation plastique et non pas élastique, ces éléments doivent subir ensuite une opération complémentaire de formage à froid. Ceci concerne aussi bien le cas des feuillards qui doivent être formés par pliage dans les outils de profilage des spiraleuses (voir par exemple FR-2.555.920) que le cas, par exemple, des opérations de préformation des fils d'armure décrits par FR-2.528.733. L'écrouissage de métal qu'implique cette ultime opération de déformation à froid pour modifier les propriétés mécaniques telles qu'elles sont mentionnées dans les exemples. Il en résulte en particulier un relèvement de la limite élastique qui peut dans certains cas ne pas être négligeable, principalement lorsque l'élément en composite à matrice en alliage d'aluminium devant être mis en place dans la machine de fabrication du flexible se trouve dans l'état recuit. La conséquence pratique de cette situation est que les valeurs caractérisant la résistance mécanique des flexibles sont des minima, les valeurs réélles pouvant dans certains cas être plus ou moins supérieures aux valeurs mentionnées ici dans les exemples.

L'exemple 1 concerne un flexible optimisé ne comportant pas de composite à matrice en alliage d'aluminium.

**Exemple n° 1**

On réalise un flexible de diamètre interne égal à 8" (203,2 mm) comportant une carcasse interne constituée d'un feuillard en acier inoxydable AISI 304 de 2 mm d'épaisseur de Rm = 540 MPa et de Re = 450 MPa, d'une gaine intérieure en rilsan de 6 mm d'épaisseur, d'une couche de fil agrafé zéta de 6,2 mm d'épaisseur réalisé avec un acier FM 15 ayant comme caractéristiques : Rm = 780 MPa, A = 2,5 %, de deux couches d'armures à 35° réalisées avec un acier FM15, d'une gaine extérieure en rilsan de 7 mm d'épaisseur.

Ce flexible, ainsi constitué présente les caractéristiques suivantes :

Exemple 1

| | Description | Rm MPa | KG/m | D.i. mm | Ep. mm |
|---|---|---|---|---|---|
| 1 | Carcasse en feuillard inox 304 80 X 2 mm | 540 | 31 | 203.2 | 10.0 |
| 2 | Gaine interne rilsan | | 4.9 | 223.2 | 6.0 |
| 3 | Zéta FM 15 épaisseur: 6.2mm | 780 | 31.2 | 235.2 | 6.2 |
| 4 | Gaine interne rilsan | | 5 | 247.6 | 6.0 |
| 5 | Armures à 35° FM15 épaisseur: 2.5 mm | 780 | 30.0 | 259.6 | 5.0 |
| 6 | Ruban | | 0.5 | 269.6 | 0.75 |
| 7 | Gaine externe rilsan | | 6.4 | 271.1 | 7.0 |

| Caractéristiques | Unité anglaise | Unité métrique |
|---|---|---|
| Diamètre interne | 8.00 in | 203.20 mm |
| Diamètre externe | 11.22 in | 285.10 mm |
| Volume interne | 0.379 cf/ft | 35.18 l/m |
| Volume externe | 0.687 cf/ft | 63.84 l/m |
| Poids vide dans l'air | 73.2 lb/ft | 108.9 kg/m |
| Poids plein d'eau de mer dans l'air | 97.4 | 144.9 kg/m |
| Poids vide dans l'eau de mer | 29.2 lb/ft | 43.4 kg/m |
| Poids plein d'eau de mer dans l'eau de mer | 53.4 lb/ft | 79.5 kg/m |
| Facteur de flottabilité vide dans l'eau de mer | | 1.66 |
| Pression d'éclatement | 5 350 psi | 369 bars |
| Pression de collapse | 1 570 psi | 108 bars |
| Limite d'endommagement en traction | 382 685 lbs | 170 250 daN |
| Profondeur de pose théorique | | 2 141 m |

Comme cela a déjà été dit, ce flexible est optimisé dans son dessin et les matériaux utilisés.

**Exemple n° 2**

On réalise un flexible comme celui de l'exemple n° 1, mais l'on remplace dans la couche n° 3 le fil agrafé de forme zéta de 6,2 mm d'épaisseur en acier FM15 par un fil agrafé zéta de 6,2 mm d'épaisseur en composite à matrice en alliage d'aluminium 7090 avec un renfort de 25 % d'un mélange de whiskers et de 90 % de particules de SiC de 60 µm de dimension moyenne, à l'état T9. L'addition des renforts a été réalisée sous agitation constante à une température comprise entre 500 et 650°C. Cette opération a été suivie d'un filage à chaud conduisant à une réduction de section de l'ordre de 70 %. Aprés l'opération de revenu, on a procédé à un écrouissage à froid de 7 %.

Dans ces conditions, les caractéritiques du composite sont : Rm = 780 MPa, A = 2 %. Le flexible ainsi réalisé a les caractéristiques suivantes :

Exemple 2

| | Description | Rm MPa | KG/m | D.i. mm | Ep. mm |
|---|---|---|---|---|---|
| 1 | Carcasse en feuillard inox 304 80 X 2 mm | 540 | 31 | 203.2 | 10.0 |

| | | | | | |
|---|---|---|---|---|---|
| 2 | Gaine interne rilsan | | 4.9 | 223.2 | 6.0 |
| 3 | Zéta composite A1 épaisseur: 6.2mm | 780 | 11.2 | 235.2 | 6.2 |
| 4 | Gaine interne rilsan | | 5 | 247.6 | 6.0 |
| 5 | Armures à 35° FM15 épaisseur: 2.5 mm | 780 | 30.0 | 259.6 | 5.0 |
| 6 | Ruban | | 0.5 | 269.6 | 0.75 |
| 7 | Gaine externe rilsan | | 6.4 | 271.1 | 7.0 |

| Caractéristiques | Unité anglaise | Unite métrique |
|---|---|---|
| Diamètre interne | 8.00 in | 203.20 mm |
| Diamètre externe | 11.22 in | 285.10 mm |
| Volume interne | 0.379 cf/ft | 35.18 l/m |
| Volume externe | 0.687 cf/ft | 63.84 l/m |
| Poids vide dans l'air | 59.7 lb/ft | 88.9 kg/m |
| Poids plein d'eau de mer dans l'air | 79.5 | 118.3 kg/m |
| Poids vide dans l'eau de mer | 23.8 lb/ft | 24.5 kg/m |
| Poids plein d'eau de mer dans l'eau de mer | 43.6 lb/ft | 59.2 kg/m |
| Facteur de flottabilité vide dans l'eau de mer | | 1.33 |
| Pression d'éclatement | 5 350 psi | 369 bars |
| Pression de collapse | 1 570 psi | 108 bars |
| Limite d'endommagement en traction | 382 685 lbs | 170 250 daN |
| Profondeur de pose théorique | | 2 876 m |

On constate qu'à performances équivalentes à celles du flexible tout acier décrit dans l'exemple n°1, on a réalisé un allègement de 25,5 % du poids du flexible plein d'eau de mer dans l'eau de mer et que la profondeur de pose théorique passe de 2 141 m à 2 876 m. Un flexible de caractéristiques équivalentes peut être réalisé avec un composite en A1 7091 avec 25 % de charge et Al 7049 avec 30 % de charge de renfort.

**Exemple n° 3**

On réalise un flexible identique à celui de l'exemple n° 1, mais l'on remplace, dans la couche n° 3, le fil agrafé de forme zéta en acier FM15 de 6,2 mm d'épaisseur par un fil zéta de 8 mm d'épaisseur en composite à matrice aluminium 7090 renforcé par 15 % de particules d'alumine de 50 µm de taille moyenne.

Les caractéristiques du composite à l'état T6 sont de Rm = 620 MPa, A = 3 %. Dans ces conditions, le flexible présente les caractéristiques suivantes :

Exemple 3

| | Description | Rm MPa | KG/m | D.i. mm | Ep. mm |
|---|---|---|---|---|---|
| 1 | Carcasse en feuillard inox 304 80 X 2 mm | 540 | 31 | 203.2 | 10.0 |
| 2 | Gaine interne rilsan | | 4.9 | 223.2 | 6.0 |
| 3 | Zéta composite aluminium épaisseur: 8.0mm | 620 | 14.3 | 235.2 | 8.0 |
| 4 | Gaine interne rilsan | | 5 | 251.2 | 6.0 |
| 5 | Armures à 35° FM15 épaisseur: 2.5 mm | 780 | 30.5 | 263.2 | 5.0 |
| 6 | Ruban | | 0.5 | 273.2 | 0.75 |
| 7 | Gaine externe rilsan | | 6.4 | 274.7 | 7.0 |

| Caractéristiques | Unité anglaise | Unité métrique |
|---|---|---|
| Diamètre interne | 8.00 in | 203.20 mm |
| Diamètre externe | 11.37 in | 288.70 mm |
| Volume interne | 0.379 cf/ft | 35.18 l/m |
| Volume externe | 0.705 cf/ft | 65.46 l/m |
| Poids vide dans l'air | 62.3 lb/ft | 92.6 kg/m |
| Poids plein d'eau de mer dans l'air | 86.5 | 128.7 kg/m |
| Poids vide dans l'eau de mer | 17.2 lb/ft | 25.5 kg/m |
| Poids plein d'eau de mer dans l'eau de mer | 41.4 lb/ft | 61.6 kg/m |
| Facteur de flottabilité vide dans l'eau de mer | | 1.38 |
| Pression d'éclatement | 5 386 psi | 371 bars |
| Pression de collapse | 1 570 psi | 108 bars |
| Limite d'endommagement en traction | 388 638 lbs | 172 898 daN |
| Profondeur de pose théorique | | 2 806 m |

On constate qu'à performances équivalentes à celle du flexible tout acier décrit dans l'exemple n°1, on a réalisé un allègement de 22,5 % du poids du flexible plein d'eau de mer dans l'eau de mer et que la profondeur de pose théorique passe de 2 141 m à 2 806 m.

Un flexible de caractéristiques mécaniques sensiblement équivalentes peut être obtenu en utilisant un composite à matrice en alliage 7050, 7178, 7075, 7001, à l'état T6 ou H6 un alliage 2017 A à l'état T4 suivi d'un écrouissage de 10 %, ou les alliages 2014, 2024, 2124 avec un renfort de 20 à 30 % de particules de carbure de silicium.

**Exemple n° 4**

On réalise un flexible identique à celui de l'exemple n° 1, mais l'on remplace, dans la couche n° 3, le fil agrafé de forme zéta de 6,2 mm d'épaisseur en acier FM15 par un fil agrafé zéta de 10 mm d'épaisseur en composite à matrice aluminium 6061 avec un renfort de 20 % en particules de carbure de silicium de 50 µm de dimension moyenne, à l'état T8.

Exemple 4

| | Description | Rm MPa | KG/m | D.i. mm | Ep. mm |
|---|---|---|---|---|---|
| 1 | Carcasse en feuillard inox 304 80 X 2 mm | 540 | 31 | 203.2 | 10.0 |
| 2 | Gaine interne rilsan | | 4.9 | 223.2 | 6.0 |
| 3 | Zéta composite aluminium épaisseur: 10 mm | 500 | 17.4 | 235.2 | 10.0 |
| 4 | Gaine interne rilsan | | 5.1 | 255.2 | 6.0 |
| 5 | Armures à 35° FM15 épaisseur: 2.5 mm | 780 | 31.0 | 267.2 | 5.0 |
| 6 | Ruban | | 0.5 | 277.2 | 0.75 |
| 7 | Gaine externe rilsan | | 6.5 | 278.7 | 7.0 |

| Caractéristiques | Unité anglaise | Unité métrique |
|---|---|---|
| Diamètre interne | 8.00 in | 203.20 mm |
| Diamètre externe | 11.52 in | 292.70 mm |
| Volume interne | 0.379 cf/ft | 35.18 l/m |
| Volume externe | 0.724 cf/ft | 67.29 l/m |
| Poids vide dans l'air | 64.8 lb/ft | 96.3 kg/m |
| Poids plein d'eau de mer dans l'air | 89.0 | 132.4 kg/m |
| Poids vide dans l'eau de mer | 18.4 lb/ft | 27.4 kg/m |
| Poids plein d'eau de mer dans l'eau de mer | 42.6 lb/ft | 63.4 kg/m |
| Facteur de flottabilité vide dans l'eau de mer | | 1.40 |
| Pression d'éclatement | 5 398 psi | 372 bars |
| Pression de collapse | 1 570 psi | 108 bars |
| Limite d'endommagement en traction | 392 805 lbs | 174 752 daN |
| Profondeur de pose théorique | | 2 756 m |

Les caractéristiques du composite sont de Rm = 500 MPa, A = 6 %. Dans ces conditions, les caractéristiques du flexible obtenu sont dans le tableau 4.

On constate que pour des caractéristiques identiques de pression d'éclatement et de pression de collapse, on a réalisé avec ce flexible un allégement de 20,2 % du poids du flexible plein d'eau de mer dans l'eau par rapport au poids du flexible tout acier de l'exemple n° 1 et que la profondeur théorique de pose est de 2 756 m contre 2 140 m.

**Exemple n° 5**

On réalise un flexible comme celui de l'exemple n° 1, mais l'on remplace dans la couche n° 3 le fil agrafé de forme zéta de 6,2 mm d'épaisseur en acier FM15 par un fil agrafé zéta de 12 mm d'épaisseur en composite à matrice en alliage d'aluminium 5056 à l'état T9 avec un renfort particulaire de 15 % en carbure de silicium de 40 µm de taille moyenne, de caractéristiques suivantes :

Exemple 5

| | Description | Rm MPa | KG/m | D.i. mm | Ep. mm |
|---|---|---|---|---|---|
| 1 | Carcasse en feuillard inox 304 80 X 2 mm | 540 | 31.0 | 203.2 | 10.0 |
| 2 | Gaine interne rilsan | | 4.9 | 223.2 | 6.0 |
| 3 | Zéta composite aluminium épaisseur: 12.0 mm | 410 | 20.8 | 235.2 | 12.0 |
| 4 | Gaine interne rilsan | | 5.2 | 259.2 | 6.0 |
| 5 | Armures à 35° FM15 épaisseur: 2.5 mm | 780 | 31.3 | 271.2 | 5.0 |
| 6 | Ruban | | 0.5 | 281.2 | 0.75 |
| 7 | Gaine externe rilsan | | 6.6 | 282.7 | 7.0 |

| Caractéristiques | Unité anglaise | Unité métrique |
|---|---|---|
| Diamètre interne | 8.00 in | 203.20 mm |
| Diamètre externe | 11.68 in | 296.70 mm |

| | | |
|---|---|---|
| Volume interne | 0.379 cf/ft | 35.18 l/m |
| Volume externe | 0.744 cf/ft | 69.14 l/m |
| Poids vide dans l'air | 67.2 lb/ft | 100.0 kg/m |
| Poids plein d'eau de mer dans l'air | 91.4 | 136.1 kg/m |
| Poids vide dans l'eau de mer | 19.6 lb/ft | 29.2 kg/m |
| Poids plein d'eau de mer dans l'eau de mer | 43.8 lb/ft | 65.2 kg/m |
| Facteur de flottabilité vide dans l'eau de mer | | 1.41 |
| Pression d'éclatement | 5 386 psi | 371 bars |
| Pression de collapse | 1 570 psi | 108 bars |
| Limite d'endommagement en traction | 412 147 lbs | 183 357 daN |
| Profondeur de pose théorique | | 2 812 m |

On constate qu'à performances équivalentes au niveau de la pression d'éclatement et de la pression de collapse, on a réalisé un allégement de 18 % du poids de flexible plein d'eau de mer dans l'eau de mer et que la profondeur de pose théorique est de 2 812 m.

On peut réaliser un flexible de caractéristiques mécaniques et de poids équivalents en remplaçant la matrice en alliage 5056 par une matrice en alliage de la série 6000 ; les alliages 6063, 6082 avec un renfort particulaire de 10 à 20 %.

Un flexible de caractéristiques mécaniques équivalentes peut aussi être réalisé avec des composites avec une matrice de la série 5000, notamment l'alliage 5082 à l'état H1 ou H3X avec un renfort de 10 à 25 % de carbure de silicium et les composites à matrice en alliages 5050, 5183, 2117, 2618.

**Exemple n° 6**

On réalise un flexible comme celui de l'exemple n° 1, mais l'on remplace la couche de zéta de 6,2 mm d'épaisseur en acier FM15 par une couche de fil zéta de 14 mm d'épaisseur réalisée en composite à matrice d'alliage 6082 à l'état T4 avec 10 % de renfort en particules de carbure de silicium de 20 µm de taille moyenne dont les caractéristiques mécaniques sont les suivantes : Rm = 350 Pa, A = 9 %.

Dans ces conditions, les caractéristiques du flexible sont dans le tableau 6.

Exemple 6

| | Description | Rm MPa | KG/m | D.i. mm | Ep. mm |
|---|---|---|---|---|---|
| 1 | Carcasse en feuillard inox 304 80 X 2 mm | 540 | 31.0 | 203.2 | 10.0 |
| 2 | Gaine interne rilsan | | 4.9 | 223.2 | 6.0 |
| 3 | Zéta composite en A1 épaisseur: 14.0 mm | 350 | 24.4 | 235.2 | 14.0 |
| 4 | Gaine interne rilsan | | 5.3 | 263.2 | 6.0 |
| 5 | Armures à 35° FM15 épaisseur: 2.5 mm | 780 | 31.9 | 275.2 | 5.0 |
| 6 | Ruban | | 0.5 | 285.2 | 0.75 |
| 7 | Gaine externe rilsan | | 6.7 | 286.7 | 7.0 |

| Caractéristiques | Unité anglaise | Unité métrique |
|---|---|---|
| Diamètre interne | 8.00 in | 203.20 mm |
| Diamètre externe | 11.84 in | 300.70 mm |
| Volume interne | 0.379 cf/ft | 35.18 l/m |
| Volume externe | 0.764 cf/ft | 71.02 l/m |
| Poids vide dans l'air | 70.3 lb/ft | 104.7 kg/m |
| Poids plein d'eau de mer dans l'air | 94.6 | 140.8 kg/m |
| Poids vide dans l'eau de mer | 21.5 lb/ft | 32.0 kg/m |
| Poids plein d'eau de mer dans l'eau de mer | 45.7 lb/ft | 68.0 kg/m |
| Facteur de flottabilité vide dans l'eau de mer | | 1.44 |
| Pression d'éclatement | 5 386 psi | 371 bars |
| Pression de collapse | 1 570 psi | 108 bars |
| Limite d'endommagement en traction | 419 965 lbs | 186 835 daN |
| Profondeur de pose théorique | | 2 747 m |

On constate que l'utilisation d'un zéta de 14 mm d'épaisseur en composite à matrice en alliage d'aluminium permet de réaliser un allégement du flexible plein d'eau de mer dans l'eau de mer de 14,5 % par rapport au flexible de l'exemple n° 1 et que la profondeur de pose théorique passe à 2 747 m.

Un flexible de caractéristiques mécaniques identiques peut être réalisé en remplaçant le composite à matrice en alliage 6082 par un composite à matrice en alliage 5086, 5154, 5754, 5052 à l'état H1 ou en alliages 6005A, 6081, 6181, 6351, 6060, 6066, 6070 à l'état H1, T4 ou T6 ou T8 ou T9, en alliage 7020, 7050, 7175, 7475 à l'état T6 avec un renfort en particules de Sic ou de $Al_2O_3$ de 8 à 25 %.

**Exemple n° 7**

On réalise un flexible comme celui décrit dans l'exemple n° 1, mais l'on remplace la couche n°3 de fil zéta de 6,2 mm d'épaisseur en acier FM15 par une couche de fil zéta de 16 mm d'épaisseur en composite à matrice en alliage d'aluminium 5052 avec 15 % de renfort de carbure de silicium de 30 µm de taille moyenne à l'état H1, l'écrouissage final étant de 20 %, de caractéristiques mécaniques Rm = 310 MPa, A % = 7.

Dans ces conditions, les caractéristiques du flexible obtenu sont les suivantes :

Exemple 7

| | Description | Rm MPa | KG/m | D.i. mm | Ep. mm |
|---|---|---|---|---|---|
| 1 | Carcasse en feuillard inox 304 80 X 2 mm | 540 | 31.0 | 203.2 | 10.0 |
| 2 | Gaine interne rilsan | | 4.9 | 223.2 | 6.0 |

| | | | | | |
|---|---|---|---|---|---|
| 3 | Zéta en composite A1 épaisseur: 16.0 mm | 340 | 28.4 | 235.2 | 16.0 |
| 4 | Gaine interne rilsan | | 5.4 | 267.2 | 6.0 |
| 5 | Armures à 35° FM15 épaisseur: 2.5 mm | 780 | 32.3 | 279.2 | 5.0 |
| 6 | Ruban | | 0.5 | 289.2 | 0.75 |
| 7 | Gaine externe rilsan | | 6.8 | 290.7 | 7.0 |

| Caractéristiques | Unité anglaise | Unité métrique |
|---|---|---|
| Diamètre interne | 8.00 in | 203.20 mm |
| Diamètre externe | 12.00 in | 304.70 mm |
| Volume interne | 0.379 cf/ft | 35.18 l/m |
| Volume externe | 0.785 cf/ft | 72.92 l/m |
| Poids vide dans l'air | 73.3 lb/ft | 109.2 kg/m |
| Poids plein d'eau de mer dans l'air | 97.6 | 145.2 kg/m |
| Poids vide dans l'eau de mer | 23.1 lb/ft | 34.4 kg/m |
| Poids plein d'eau de mer dans l'eau de mer | 47.4 lb/ft | 70.5 kg/m |
| Facteur de flottabilité vide dans l'eau de mer | | 1.46 |
| Pression d'éclatement | 5 386 psi | 371 bars |
| Pression de collapse | 1 570 psi | 108 bars |
| Limite d'endommagement en traction | 423 475 lbs | 188 397 daN |
| Profondeur de pose théorique | | 2 672 m |

On constate que pour des caractéristiques identiques de pression d'éclatement et de pression de collapse, on a obtenu avec ce flexible un allégement de 11,3 % et que la profondeur théorique de pose est de 2 672 m.

Un flexible de caractéristiques sensiblement équivalentes peut être obtenu en remplaçant dans la matrice l'alliage 5052 par les alliages 2017, 2117, 5050, 5154, 5754 à l'état H1, les alliages 5056, 5082, 5086 et 5183 à l'état F ou H et avec un renfort de 5 à 25 % en particules de Sic ou $Al_2O_3$.

**Exemple n°8**

On réalise un flexible comme celui décrit dans l'exemple n° 1, mais l'on remplace la couche n° 1 constituée d'une carcasse interne en feuillard acier inoxydable AISI 304 de 2 mm d'épaisseur par un feuillard en composite en alliage d'aluminium 5052 avec un renfort de 20 % en particules de carbure de silicium de 15 µm de taille moyenne à l'état H1 de 3,5 mm d'épaisseur de Rm = 340 MPa et Re = 300 MPa et de module de Young : 95 000 MPa.

Dans ces conditions, les caractéristiques du flexible obtenu sont les suivantes :

Exemple 8

| | Description | Rm MPa | KG/m | D.i. mm | Ep. mm |
|---|---|---|---|---|---|
| 1 | Carcasse en feuillard composite A1 140 X 3,5 mm | 320 | 19,3 | 203,2 | 17.5 |
| 2 | Gaine interne rilsan | | 5.2 | 238.2 | 6.0 |
| 3 | Zéta FM15 épaisseur: 6,7mm | 780 | 35.8 | 250.2 | 6.7 |
| 4 | Gaine interne rilsan | | 5.3 | 263.6 | 6.0 |
| 5 | Armures à 35° FM15 épaisseur: 2.5 mm | 780 | 31.8 | 275.6 | 5.0 |
| 6 | Ruban | | 0.5 | 285.6 | 0.75 |
| 7 | Gaine externe rilsan | | 6.7 | 287.1 | 7.0 |

| Caractéristiques | Unité anglaise | Unité métrique |
|---|---|---|
| Diamètre interne | 8.00 in | 203.20 mm |
| Diamètre externe | 11.85 in | 301.10 mm |
| Volume interne | 0.403 cf/ft | 37.41 l/m |
| Volume externe | 0.766 cf/ft | 71.21 l/m |
| Poids vide dans l'air | 70.2 lb/ft | 104.5 kg/m |
| Poids plein d'eau de mer dans l'air | 96.0 lb/ft | 142.9 kg/m |
| Poids vide dans l'eau de mer | 21.5 lb/ft | 32.0 kg/m |
| Poids plein d'eau de mer dans l'eau de mer | 47.3 lb/ft | 70.4 kg/m |
| Facteur de flottabilité vide dans l'eau de mer | | 1.43 |
| Pression d'éclatement | 5 365 psi | 370 bars |
| Pression de collapse | 4 130 psi | 144 bars |
| Limite d'endommagement en traction | 407 937 lbs | 181 484 daN |
| Profondeur de pose théorique | | 2 578 m |

On constate que pour une pression d'éclatement équivalente à celle du flexible de l'exemple n° 1, on a réalisé un allégement de 11,4 % et que la profondeur théorique de pose est de 2 578 m, la pression de collapse est augmentée et passe de 106 à 144 bars.

On obtiendra un flexible de caractéristiques identiques, quelle que soit la nuance et l'état de la matrice en aluminium utilisé pour réaliser la carcasse interne, on utilisera préférentiellement les alliages présentant la meilleure tenue à la corrosion et notamment les alliages 1100, 1180, 3003, 5052, 5056, 5083, 5456, 6060, 6061, 6082, 6083, 6106. Les alliages de la série 2000 et de la série 7000 peuvent aussi être utilisés et la teneur en renfort de particules sera de 5 à 25 % poids.

**Exemple n° 9**

On réalise un flexible comme celui de l'exemple n° 1, mais l'on remplace la couche n° 1 constituée d'une carcasse interne en feuillard en acier inoxydable AISI 304 de 2 mm d'épaisseur par une carcasse interne constituée par un fil zéta de 12 mm d'épaisseur en composite à matrice en alliage d'aluminium A1 3103 à 20 % de renfort en particules de carbure de silicium de 20 µm de taille moyenne, à l'état H1, de Rm = 250 MPa et de Re = 220 MPa, de 90 000 MPa de module d'Young et dans la couche n°3 l'épaisseur du fil zéta en acier FM est portée à 6,4 mm.

Dans ces conditions, les caractéristiques du flexible sont les suivantes :

Exemple 9

| | Description | Rm MPa | KG/m | D.i. mm | Ep. mm |
|---|---|---|---|---|---|
| 1 | Zéta composite aluminium épaisseur : 12.0 mm | 250 | 18.6 | 203.2 | 12.0 |
| 2 | Gaine interne rilsan | | 4.6 | 227.2 | 6.0 |
| 3 | Zéta FM15 épaisseur: 6.4mm | 780 | 32.7 | 239.2 | 6.4 |
| 4 | Gaine interne rilsan | | 5.1 | 252.0 | 6.0 |
| 5 | Armures à 35° FM15 épaisseur: 2.5 mm | 780 | 30.6 | 264.0 | 5.0 |
| 6 | Ruban | | 0.5 | 274.0 | 0.75 |
| 7 | Gaine externe rilsan | | 6.5 | 275.6 | 7.0 |

| Caractéristiques | Unité anglaise | Unité métrique |
|---|---|---|
| Diamètre interne | 8.00 in | 203.20 mm |
| Diamètre externe | 11.40 in | 289.50 mm |
| Volume interne | 0.349 cf/ft | 32.43 l/m |
| Volume externe | 0.709 cf/ft | 65.82 l/m |
| Poids vide dans l'air | 66.2 lb/ft | 98.5 kg/m |
| Poids plein d'eau de mer dans l'air | 88.6 | 131.8 kg/m |
| Poids vide dans l'eau de mer | 21.1 lb/ft | 31.3 kg/m |
| Poids plein d'eau de mer dans l'eau de mer | 43.4 lb/ft | 64.5 kg/m |
| Facteur de flottabilité vide dans l'eau de mer | | 1.46 |
| Pression d'éclatement | 5 428 psi | 374 bars |
| Pression de collapse | 1 768 psi | 159 bars |
| Limite d'endommagement | | |

| | | |
|---|---|---|
| en traction | 391 495 lbs | 174 169 daN |
| Profondeur de pose théorique | | 2 700 m |

On constate que pour une pression d'éclatement identique à celle du flexible de l'exemple n° 1, l'utilisation d'une carcasse interne en fil zéta de 12 mm en composite aluminium a permis de porter la pression de collapse à 159 bars et que l'on a réalisé un allégement de 18,8 % et que la profondeur de pose théorique est de 2.700 mètres.

L'alliage A1 3103 peut être remplacé dans la matrice par tout autre alliage des séries 1000, 2000, 3000, 4000, 5000, 6000 et 7000.

**Exemple n° 10**

On réalise un flexible comme dans l'exemple n° 1, mais l'on remplace le feuillard en acier inoxydable de la carcasse interne par un fil zéta de 14 mm d'épaisseur en alliage 6061 ayant comme caractéristiques : Rm = 350 MPa, Re = 320 MPa, E = 70 000 MPa, dans la voûte de pression (couche n° 3) le fil zéta en FM15 est remplacé par un fil zéta de 10 mm d'épaisseur réalisé en alliage d'aluminium 2017 ayant comme caractéristiques Rm = 510 MPa et, dans la couche de traction l'armure en acier FM15 est remplacée par une armure en fil de 3,6 mm d'épaisseur réalisée avec un composite à matrice aluminium 7090 à 20 % de renfort particulaire SiC et ayant comme caractéristiques Rm = 620 MPa et A = 3 %.

Dans ces conditions, les caractéristiques du flexible sont les suivantes :

Exemple 10

| | Description | Rm MPa | KG/m | D.i. mm | Ep. mm |
|---|---|---|---|---|---|
| 1 | Zéta aluminium épaisseur : 14.0 mm | 400 | 21.2 | 203.2 | 14.0 |
| 2 | Gaine interne rilsan | | 4.6 | 231.2 | 6.0 |

| | | | | | |
|---|---|---|---|---|---|
| 3 | Zéta aluminium | | | | |
| | épaisseur: 10 mm | 510 | 17.9 | 243.2 | 10.0 |
| 4 | Gaine interne rilsan | | 5.3 | 263.2 | 6.0 |
| 5 | Armures à 35° composite A1 | | | | |
| | épaisseur: 3.6 mm | 620 | 15.8 | 275.2 | 8.0 |
| 6 | Ruban | | 0.5 | 289.6 | 0.75 |
| 7 | Gaine externe rilsan | | 6.8 | 291.1 | 7.0 |

| Caractéristiques | Unité anglaise | Unité métrique |
|---|---|---|
| Diamètre interne | 8.00 in | 203.20 mm |
| Diamètre externe | 12.07 in | 306.70 mm |
| Volume interne | 0.349 cf/ft | 32.43 l/m |
| Volume externe | 0.795 cf/ft | 73.11 l/m |
| Poids vide dans l'air | 49.8 lb/ft | 72.11 kg/m |
| Poids plein d'eau de mer dans l'air | 72.1 | 105.5 kg/m |
| Poids vide dans l'eau de mer | - 1.1 lb/ft | - 2.7 kg/m |
| Poids plein d'eau de mer dans l'eau de mer | 21.2 lb/ft | 30.6 kg/m |
| Facteur de flottabilité vide dans l'eau de mer | | 0.96 |
| Pression d'éclatement | 5 413 psi | 370 bars |
| Pression de collapse | 2 724 psi | 188 bars |
| Limite d'endommagement en traction | 427 166 lbs | 198 038 daN |
| Profondeur de pose théorique | | 6 471 m |

On constate qu'à performance équivalente en pression d'éclatement, on a réalisé un flexible présentant un allègement de 61 % de poids du flexible plein d'eau de mer dans l'eau de mer et que la profondeur de pose théorique passe de 2 141 m à 6 471 m et que la pression de collapse est de 188 bars.

**Exemple n° 11**

On réalise un flexible identique à celui de l'exemple n° 10, mais l'on remplace, dans la couche n° 1, le fil zéta en alliage d'aluminium par un fil zéta en composite à matrice en alliage d'aluminium 5052 renforcé par 20 % de particules de carbure de silicium de 70 μm de taille moyenne et de caractéristiques : Rm = 340 MPa, Re = 300 MPa, A = 4 %, E = 100 000 MPa et dans la couche n° 3, le fil zéta en alliage d'aluminium par un fil zéta en composite à matrice aluminium identique à celui utilisé pour les armures de la voûte de pression.

Dans ces conditions, les caractéristiques du flexible sont les suivantes :

Exemple 11

| | Description | Rm MPa | KG/m | D.i. mm | Ep. mm |
|---|---|---|---|---|---|
| 1 | Zéta composite aluminium épaisseur : 14.0 mm | 400 | 21.2 | 203.2 | 14.0 |
| 2 | Gaine interne rilsan | | 4.6 | 231.2 | 6.0 |
| 3 | Zéta aluminium épaisseur: 10 mm | 620 | 17.9 | 243.2 | 10.0 |
| 4 | Gaine interne rilsan | | 5.3 | 263.2 | 6.0 |
| 5 | Armures à 35° composite A1 épaisseur: 3.6 mm | 620 | 15.8 | 275.2 | 7.2 |
| 6 | Ruban | | 0.5 | 289.6 | 0.75 |
| 7 | Gaine externe rilsan | | 6.8 | 291.1 | 7.0 |

| Caractéristiques | Unité anglaise | Unité métrique |
|---|---|---|
| Diamètre interne | 8.00 in | 203.20 mm |
| Diamètre externe | 12.01 in | 305.10 mm |
| Volume interne | 0.349 cf/ft | 32.43 l/m |
| Volume externe | 0.787 cf/ft | 73.11 l/m |
| Poids vide dans l'air | 48.6 lb/ft | 72.30 kg/m |
| Poids plein d'eau de mer dans l'air | 70.9 lb/ft | 105.5 kg/m |
| Poids vide dans l'eau de mer | - 1.8 lb/ft | - 2.7 kg/m |
| Poids plein d'eau de mer dans l'eau de mer | 20.5 lb/ft | 30.6 kg/m |
| Facteur de flottabilité vide dans l'eau de mer | | 0.96 |
| Pression d'éclatement | 6 434 psi | 444 bars |
| Pression de collapse | 2 724 psi | 275 bars |
| Limite d'endommagement en traction | ... ... lbs | 205 509 daN |
| Profondeur de pose théorique | | 6 715 m |

On constate que par rapport au flexible de l'exemple n° 1, on a réalisé un allégement de 61 % du poids du flexible plein d'eau de mer dans l'eau et que la pression d'éclatement est augmentée de 370 à 444 bars, la pression de collapse passe de 108 bars à 275 bars et la profondeur de pose théorique de 2 171 m à 6 715 m.

Par rapport au flexible de l'exemple n° 10, la pression d'éclatement passe de 370 à 444 bars, la pression de collapse passe de 188 à 275 bars et la profondeur de pose théorique de 6 471 à 6 715 m.

De plus, des essais d'usure réalisés en laboratoire entre deux fils en alliage en composite à matrice aluminium renforcé de 20 % de carbure de silicium de 70 µm de taille moyenne ont montré que la vitesse d'usure était diminuée d'un facteur au moins égal à 10 par rapport à la vitesse d'usure de fils réalisés en alliage d'aluminium et sans renfort.

De même, cette vitesse d'usure, en frottement avec des déplacements relatifs d'un fil sur l'autre de 3 à 10 mm et des pressions de contact de 20 à 180 bars représentatives de la plage des conditions de frottement que l'on peut rencontrer dans un flexible en service est dans le cas des fils réalisés en composite, toujours inférieure d'un facteur variable selon les conditions d'essais, mais allant de 1,5 à 4, à la vitesse d'usure obtenu dans les mêmes conditions par frottement de deux fils d'acier en FM15.

Il résulte des applications ci-dessus que, dans le cas de l'exemple 1, on peut évaluer, à titre d'approximation et spécifiquement, dans le but de faire une comparaison avec les autres exemples à environ 713 m, l'ordre de grandeur de la profondeur d'eau possible, cette valeur étant la plus faible des deux limitations qu'on peut directement estimer à partir des indications résumées figurant dans les tableaux =
"limite théorique de profondeur de pose" = 2.140 m divisée par 3, soit 713 m, et
"pression de collapse" = 1.115 m divisée par 1,5, soit 743 m.

Nous rappelons que la limitation par le poids du flexible en fonction de sa résistance axiale, en particulière, peut varier, en réalité, au moins du simple au double selon les circonstances.

Si l'on applique la même évaluation à l'exemple 11, la profondeur atteinte est supérieure à 1.800 mètres.

Dans les exemples 2 à 7 et 10, l'évaluation précédente conduirait à sous estimer les profondeurs de pose. En effet, dans ces exemples, la carcasse interne n'a pas été dimensionnée pour correspondre à la pression de pose, ceci afin de pouvoir comparer les conduites flexibles entre elles.

Il convient de noter que le "collapse" n'intervient que si la gaine externe qui est généralement étanche-est percée et que de plus la gaine 4 est non étanche ou présente un défaut d'étanchéité.

Ainsi, si la conduite flexible ne présente pas de défaut, il est possible pour évaluer la profondeur d'installation, de tenir compte de la profondeur de pose théorique et de ne plus tenir compte de la limitation donnée dans l'exemple.

La présente invention s'applique à des tubes ayant des structures autres que celle représentée à la figure 1.

La présente invention peut s'appliquer notamment à des flexibles comportant un tube intérieur en matériau plastique ou élastomérique avec ou sans carcasse, etc.

La figure 2 représente en section une couche constituée d'un feuillard agrafé 8. Cette couche constitue généralement la carcasse interne 1.

La figure 3 représente un élément profilé 9 en forme de zéta. Cette forme permet d'avoir une partie 10, tel un lobe ou arrondi, qui coopère avec un creux 11 de la spire adjacente. Ainsi, on obtient un emboitement des spires adjacentes entre-elles.

Le profilé en forme de zéta sert généralement à la constitution de l'armure de résistance à la pression, mais peut servir aussi à constituer la carcasse interne 1.

On ne sortira du cadre de la présente invention si l'on utilise d'autres formes de profilé que le zéta, notamment des formes simples, tel que des profilés à section rectangulaire ou des formes en "U".

Sur la figure 3, on a représenté en pointillé un profilé rectangulaire 12 qui complète l'armature de pression. Ainsi, dans cet exemple, l'armature de pression combine un profilé en forme de zéta et un profilé à section rectangulaire placé de préférence à l'extérieur du profilé en forme de zéta par rapport à l'intérieur de la conduite flexible.

La figure 4 représente un autre exemple de l'armature de résistance à la pression, cette armature est constituée à partir de deux fils ou profilés 13 et 14 ayant une section en forme de "U" enroulés hélicoïdalement.

L'un de ces profilés 14 a les bras 15 du "U" ouverts vers l'extérieur par rapport à l'axe du flexible 16 et l'autre 13 a les bras 17 du "U" ouverts vers l'axe du tube.

Les bras 17 du profilé 13 coopèrent avec le creux 18 du "U" du profilé 14 et inversement les bras 15 du profilé 14 coopèrent avec le creux 19 du "U" du profilé 13.

On ne sortira pas du cadre de la présente invention si certains éléments sont noyés d'une résine élastomérique souple, notamment si les éléments de l'armature de résistance à la traction sont noyés dans une gaine caoutchouteuse.

Parmi les différentes structures de flexibles auxquelles peut s'appliquer la présente invention, on notera particulièrement en plus de celles données dans les exemples, celles qui suivent :

a) un flexible selon la figure 1, mais sans la gaine 4, mais avec une armure de résistance à la traction 5 et une armure de résistance à la pression 3 en composite à matrice en alliage d'aluminium dans les séries 2000, 5000, 6000 ou 7000,

b) un flexible selon la figure 1, mais sans armure de résistance à la pression 3, ni de gaine 4 et avec l'un au moins des éléments allongés restant dans la structure qui comporte un composite a matrice en alliage d'aluminium dans les séries 2000, 5000, 6000 ou 7000,

c) un flexible selon la figure 1, mais comportant en plus de l'élément de renfort résistant à la pression 3 en forme de zéta, une frette ou élément allongé à section de forme simple, notamment à section rectangulaire avec ou sans gaine 4 l'un au moins des éléments allongés restant dans la structure qui comporte un composite à matrice en alliage d'aluminium dans les séries 2000, 5000, 6000 ou 7000,

d) tous les exemples donnés dans la présente demande comportant une carcasse interne 1 et une gaine 2, mais en les remplaçant par un tube étanche suffisamment flexible pour permettre au produit final d'être flexible, mais d'une rigidité suffisante pour ne pas s'écraser lors de la fabrication du flexible.

Selon la présente invention, lorsque deux couches de métaux différents se succèdent, jar exemple en composite à matrice en alliage d'aluminium puis acier ou dans certains cas d'alliage d'aluminium de types différents, on pourra de préférence interposer une gaine isolante.

Par ailleurs, on ne sortira pas du cadre de la présente invention en interposant une gaine ou couche en matériau anti-frottement entre les différentes couches constituant l'un des composants selon l'invention et notamment dans le cas de l'armure de résistance à la traction lorsque celle-ci est en acier.

Dans la présente invention, les composants comportant des composites à matrice en alliage d'aluminium dans les séries 2000, 3000, 5000, 6000 ou 7000 pourront de préférence être constitués essentiellement de ces alliages d'aluminium.

Il est bien entendu que dans la présente invention, lorsque l'on utilise les dénominations pour les composites à matrice en alliages d'aluminium des séries 2000, 3000, 5000, 6000 ou 7000, il s'agit, sauf cas spécifique, de toutes les nuances d'alliage appartenant à chacune des séries.

Le flexible selon la présente invention pourra notamment comporter des matériaux composites à matrices organiques.

Dans les exemples donnés précédemment, (exemples 2 à 11), les états mentionnés pour les différents alliages d'aluminium correspondent à des états préférés.

Les nuances et états mentionnés dans les exemples 2 à 7, et 11 pour les éléments allongés compris dans les armures de résistance à la pression ou voûte, pourront être utilisés pour les éléments allongés en composite à matrice en alliage d'aluminium compris dans les armures de résistance à la traction.

Par ailleurs, on ne sortira pas du cadre de la présente invention en remplaçant l'un des alliages d'aluminium des séries, des nuances et/ou des états mentionnés dans la présente invention par un autre alliage d'aluminium équivalent.

## Revendications

1. Conduite flexible armée comportant un ou plusieurs des composants suivants, une armure de résistance à la pression (3), une armure de résistance à la traction (5) et/ou une carcasse interne (1), caractérisée en ce qu'au moins l'un desdits composants comporte un ou plusieurs éléments allongés tel un profilé, un câble, un fil ou un feuillard, ledit élément étant composé d'un matériau composite à matrice en alliage d'aluminium comportant des éléments de renfort constitués de particules et/ou de whiskers d'alumine ou de carbure de silicium utilisés à une teneur pondérale inférieur à 40%, en ce que les particules utilisées ont une taille comprise entre 4 et 400 μm, en ce que les whiskers utilisés ont un diamètre de 0,01 à 10 μm et une longueur de 10 à 600 μm, en ce que ledit élément allongé a une résistance à la rupture en traction (Rm) au moins égale à 300 MPa et de préférence au moins à 350MPa, et en ce que le module d'Young dudit élément allongé est supérieur à 75.000 MPa (7650 Kg/mm$^2$).

2. Conduite selon la revendication 1, caractérisée en ce que ledit composite a une matrice en alliage d'aluminium des séries 2000, 5000, 3000, 6000 ou 7000 .

3. Conduite selon l'une des revendications 1 ou 2 caractérisée en ce que ladite teneur est comprise entre 3 et 25%.

4. Conduite selon l'une des revendications 1 à 3 caractérisée en ce que en ce que les particules ont une taille comprise entre 10 et 200 μm.

5. Conduite selon l'une des revendications 2 à 4 comportant une armure de résistance à la pression (3) et/ou une armure de résistance à la traction (5), caractérisée en ce qu'au moins l'une desdites armures comporte au moins un élément allongé composé d'un composite à matrice en alliage d'aluminium dans l'une des séries 2000, 3000, 5000, 6000 ou 7000 et de préférence dans l'une des nuances suivantes : 2014, 2017, 2024, 2117, 2124, 2618, 5050, 5052, 5056, 5082, 5086, 5154, 5183, 5754, 6005, 6060, 6061, 6063, 6066, 6070, 6081, 6082, 6181, 6351, 7001, 7020, 7049, 7050, 7075, 7090, 7091, 7175, 7178 ou 7475.

6. Conduite selon la revendication 1, comportant une carcasse interne (1), caractérisée en ce que ladite carcasse comporte au moins un élément allongé composé d'un composite à matrice en alliage d'aluminium dans l'une des séries : 1000, 2000, 3000, 4000, 5000, 6000, 7000 et de préférence dans l'une des nuances : 1100, 1180, 3103, 5050, 5052, 5056, 5083, 5456, 6060, 6061, 6082, 6083 ou 6106.

7. Conduite selon l'une des revendications 1 à 5, comportant une carcasse (1), caractérisée en ce que ladite carcasse comporte au moins un élément allongé composé d'un composite à matrice en alliage d'aluminium ayant une résistance à la rupture en traction (Rm) au moins égale à 200 MPa et de préférence au moins égale à 250 MPa et une limite élastique à 0,2 % $Re_{0,2}$ au moins égale à 150 MPa et de préférence au moins égal à 190 MPa.

8. Conduite selon l'une des revendications précédentes, caractérisée en ce qu'elle comporte une carcasse interne comportant au moins un élément allongé composé d'un matériau composite à matrice en alliage d'aluminium, ledit élément allongé étant un profilé ou un fils emboîtable ou agrafable.

9. Conduite selon la revendication 6, caractérisé en ce que ledit élément allongé est du type "Zéta" (9).

10. Conduite selon les revendications 1 à 8 caractérisée en ce que l'élément allongé a subi une opération de filage ou laminage à chaud.

11. Conduite selon la revendication 1 à 10 où les éléments de renfort sont introduits par addition sous agitation constante dans l'alliage d'aluminium à l'état pateux ou liquide.

12. Conduite selon la revendication 8, caractérisée en ce que ledit élément allongé constitué dudit matériau composite à matrice en alliage d'aluminium a subi une opération d'écrouissage en traitement final précédée ou/et suivie d'un revenu.

13. Conduite selon l'une des revendications 1 à 12, caractérisée en ce que ledit élément allongé a subi un écrouissage à froid ayant un taux de 3 % au moins dans le cas d'utilisation d'un alliage d'aluminium des séries 2000, 6000, 7000, ou un taux de 10 % au moins dans le cas d'utilisation d'un alliage d'aluminium de la série 5000.

14. Conduite selon l'une des revendications 1 à 12, caractérisée en ce que ledit élément allongé a subi un écrouissage à froid ayant un taux compris entre 3 et 40 % et de préférence entre 5 et 20 % dans le cas d'utilisation d'un composite à matrice en alliage d'aluminium des séries 2000, 6000 ou 7000.

15. Conduite selon l'une des revendications 1 à 12, caractérisée en ce que ledit élément allongé a subi un écrouissage à froid ayant un taux compris entre 20 et 90 % et de préférence entre 10 et 60 % dans le cas d'utilisation d'un composite en alliage d'aluminium de la série 5000.

16. Conduite selon l'une des revendications précédentes, caractérisée en ce que ledit élément allongé a subi un laminage ou un étirage à froid.

17. Conduite selon la revendication 13, caractérisée en ce que ledit élément allongé a subi un recuit partiel ou total ou une opération de trempe revenue dont les paramètres caractéristiques sont fonction dudit taux d'écrouissage et/ou de la nature de l'alliage.

18. Conduite selon l'une des revendications 1 à 14, caractérisée en ce que ledit composant comportant le matériau composite en l'aluminium est recouvert d'un alliage de protection contre la corrosion.

19. Conduite selon l'une des revendications précédentes comportant une carcasse, une gaine et une armure, ladite carcasse comportant un feuillard agrafé ou un fils agrafé notamment un zéta, et ladite armure comportant un élément qui est un profilé, un câble ou fils, caractérisée en ce que ledit feuillard ou fils agrafé de ladite carcasse est composé d'un composite à matrice en alliage d'aluminium des séries 2000, 3000, 4000, 5000, 6000 ou 7000, et/ou ledit élément allongé de ladite armure est constitué d'un composite à matrice en alliage d'aluminium des séries 2000, 5000, 6000 ou 7000.

**20.** Conduite selon la revendication 19, caractérisée en ce qu'elle comporte une carcasse constituée d'un feuillard ou un fils agrafé en acier ou en alliage d'aluminium.

**21.** Conduite selon la revendication 19, caractérisée en ce que ladite armure comporte de l'acier ou est composé en alliage d'aluminium.

**22.** Conduite selon la revendication 1, caractérisée en ce que ladite armure de résistance à la traction comporte essentiellement de l'acier et ladite voûte comporte essentiellement un matériau composite à matrice en alliage d'aluminium.

**23.** Conduite selon la revendication 1, caractérisée en ce que ladite armure de résistance à la pression ou voûte comporte essentiellement de l'acier et ladite armure de résistance à la traction comporte essentiellement un matériau composite à matrice en alliage d'aluminium.

**24.** Conduite selon l'une des revendications 22 ou 23, caractérisée en ce qu'elle comporte une gaine antifrottement, et de préférence qui est étanche et isolante électriquement, entre la voûte et l'armure de résistance à la traction.

**25.** Conduite selon la revendication 1, caractérisée en ce que ladite armure de résistance à la traction et ladite voûte comportent essentiellement un matériau composite à matrice en alliage d'aluminium de la série 2000, 3000, 5000, 6000 ou 7000.

**26.** Conduite selon l'une des revendications précédentes, caractérisée en ce qu'elle comporte un feuillard externe ou du fils agrafable externe, composé éventuellement par composite à matrice en alliage d'aluminium.

**27.** Conduite selon l'une des revendications précédentes, caractérisée en ce qu'elle comporte une armure de résistance à la pression comportant au moins une nappe formée à partir d'un profilé ayant éventuellement une section à forme emboitable, tel un zéta, un "U", réalisé à partir d'un composite à matrice en alliage d'aluminium de la série 2000, 5000, 6000 ou 7000.

**28.** Procédé d'élaboration d'un élément allongé composé par un matériau composite à matrice en alliage d'aluminium destiné à la fabrication d'une conduite flexible armée selon l'une des revendications précédentes, caractérisé en ce que ledit matériau est obtenu par l'incorporation d'éléments de renfort par brassage dans un alliage d'aluminium à l'état semi-pateux ou liquide et par une opération de compactage à chaud dudit matériau composite par laminage ou filage.

**29.** Procédé selon la revendication 28 caractérisé en ce que ladite incorporation d'éléments de renfort est efféctuée au moment où ledit alliage d'aluminium sort du four de fusion et où il est coulé dans une gorge de mise en forme.

**30.** Procédé selon l'une des revendication 28 ou 29 caractérisé en ce que l'opération de laminage ou filage est effectué à une température comprise entre 150 et 500°C.

## Patentansprüche

**1.** Flexible bewehrte Leitung mit einer oder mehreren der folgenden Komponenten, einer druckbeständigen Bewehrung (3), einer zugbeständigen Bewehrung (5) und/oder einer Innenkarkasse (1), dadurch gekennzeichnet, daß wenigstens eine dieser Komponenten eines oder mehrere längliche Elemente wie ein Profil, ein Kabel, einen Draht oder ein Band umfaßt, wobei dieses Element aufgebaut ist aus einem Verbundmaterial mit einer Matrix aus Aluminiumlegierung, die Verstärkungselemente umfaßt, die gebildet sind aus Partikeln und/oder Whiskern aus Aluminiumoxid oder Siliciumkarbid, die bei einem Gewichtsanteil von weniger als 40% eingestetzt sind, daß die verwendeten Partikel eine Abmessung zwischen 4 und 400 µm haben, daß die verwendeten Whisker einen Durchmesser von 0,01 bis 10 µm und eine Länge von 10 bis 600 µm haben, daß dieses längliche Element einen Reißwiderstand bei Zug (Rm) hat, der wenigstens gleich 300 MPa und vorzugsweise wenigstens 350 MPa ausmacht und daß der Youngmodul dieses länglichen Elements größer als 75.000 MPa (7650 kg/mm$^2$) ist.

2. Leitung nach Anspruch 1, dadurch gekennzeichnet, daß dieses Verbundmaterial eine Matrix aus Aluminiumlegierung der Reihen 2000, 5000, 3000, 6000 oder 7000 hat.

3. Leitung nach einem der Ansprüche 1 oder 2, dadurch gekennzeichnet, daß dieser Gehalt zwischen 3 und 25% liegt.

4. Leitung nach einem der Ansprüche 1 bis 3, dadurch gekennzeichnet, daß die Partikel eine Abmessung zwischen 10 und 200 µm haben.

5. Leitung nach einem der Ansprüche 2 bis 4 mit einer druckbeständigen Bewehrung (3) und/oder einer zugbeständigen Bewehrung (5), dadurch gekennzeichnet, daß wenigstens eine dieser Bewehrungen wenigstens ein längliches Element umfaßt, das sich zusammensetzt aus einem Verbund mit Matrix in Aluminiumlegierung in einer der Reihen 2000, 3000, 5000, 6000 oder 7000 und vorzugsweise in einer der folgenden Sorten: 2014, 2017, 2024, 2117, 2124, 2618, 5050, 5052, 5056, 5082, 5086, 5154, 5183, 5754, 6005, 6060, 6061, 6063, 6066, 6070, 6081, 6082, 6181, 6351, 7001, 7020, 7049, 7050, 7075, 7090, 7091, 7175, 7178 oder 7475.

6. Leitung nach Anspruch 1, eine Innenkarkasse (1) umfassend, dadurch gekennzeichnet, daß diese Karkasse wenigstens ein längliches Element umfaßt, das sich aus einem Verbund mit Matrix in Aluminiumlegierung in einer der Reihen zusammensetzt: 1000, 2000, 3000, 4000, 5000, 6000, 7000 und vorzugsweise in einer der Sorten: 1100, 1180, 3103, 5050, 5052, 5056, 5083, 5456, 6060, 6061, 6082, 6083 oder 6106.

7. Leitung nach einem der Ansprüche 1 bis 5, eine Karkasse (1) umfassend, dadurch gekennzeichnet, daß diese Karkasse wenigstens ein längliches Element umfaßt, das zusammengesetzt ist aus einem Verbund mit Matrix aus Aluminiumlegierung, die einen Reißwiderstand bei Zug (Rm) wenigstens gleich 200 MPa und vorzugsweise wenigstens gleich 250 MPa und eine 0,2% Elastizitätsgrenze $Re_{0,2}$ wenigstens gleich 150 MPa und vorzugsweise wenigstens gleich 190 MPa hat.

8. Leitung nach einem der vorhergehenden Ansprüche, dadurch gekennzeichnet, daß sie eine Innenkarkasse umfaßt, die wenigstens ein längliches Element aufweist, das zusammengesetzt ist aus einem Verbundmaterial mit Matrix in Aluminiumlegierung, wobei das längliche Element ein einrastbarer oder verhakbarer Draht oder ein solches Profil ist.

9. Leitung nach Anspruch 6, dadurch gekennzeichnet, daß das längliche Element vom Zeta-Typ (9) ist.

10. Leitung nach einem der Ansprüche 1 bis 8, dadurch gekennzeichnet, daß das längliche Element einen Vorgang des Warmfließpressens oder Warmwalzens erfahren hat.

11. Leitung nach einem der Ansprüche 1 bis 10, wo die Verstärkungselemente durch Zugabe unter konstantem Rühren in die Aluminiumlegierung im pastenförmigen oder flüssigen Zustand eingeführt sind.

12. Leitung nach Anspruch 8, dadurch gekennzeichnet, daß dieses längliche aus diesem Verbundmaterial mit Matrix aus Aluminiumlegierung gebildete Element einen Kaltverformungsvorgang als Endbehandlung vor und/oder gefolgt von einer Vergütungsbehandlung erfahren hat.

13. Leitung nach einem der Ansprüche 1 bis 12, dadurch gekennzeichnet, daß dieses längliche Element eine Kaltverformung mit einem Verhältnis von 3% wenigstens im Fall der Verwendung einer Aluminiumlegierung der Reihen 2000, 6000, 7000 oder einem Verhältnis von wenigstens 10% im Fall der Verwendung einer Aluminiumlegierung der Reihe 5000 erfahren hat.

14. Leitung nach einem der Ansprüche 1 bis 12, dadurch gekennzeichnet, daß das längliche Element eine Kaltverformung mit in einem Grad zwischen 3 und 40% und vorzugsweise zwischen 5 und 20% im Falle der Verwendung eines Verbundmaterials mit Matrix aus Aluminiumlegierung der Reihen 2000, 6000 oder 7000 erfahren hat.

15. Leitung nach einem der Ansprüche 1 bis 12, dadurch gekennzeichnet, daß dieses längliche Element eine Kaltverformung mit in einem Grad zwischen 20 und 90% und vorzugsweise zwischen 10 und 60% im Falle der Verwendung eines Verbundmaterials aus Aluminiumlegierung der Reihe 5000 erfahren hat.

**16.** Leitung nach einem der vorhergehenden Ansprüche, dadurch gekennzeichnet, daß dieses längliche Element ein Kaltwalzen oder kaltverstrecken erfahren hat.

**17.** Leitung nach Anspruch 13, dadurch gekennzeichnet, daß dieses längliche Element ein teilweises oder vollständiges Glühlen oder einen Härtungsvergütungsvorgang erfahren hat, dessen charakteristische Parameter eine Funktion dieses Kaltverfestigungsgrades  und/oder der Art der Legierung sind.

**18.** Leitung nach einem der Ansprüche 1 bis 14, dadurch gekennzeichnet, daß diese das Verbundmaterial aus Aluminium umfassende Komponente abgedeckt ist von einer Legierung zum Schutz gegen Korrosion.

**19.** Leitung nach einem der vorhergehenden Ansprüche, eine Karkasse, eine Hülle und eine Bewehrung umfassend, wobei die Karkasse ein Verhakungsband oder einen Verhakungsdraht, insbesondere von Zeta-Ausbildung umfaßt und diese Bewehrung ein Element umfaßt, das ein Profil, ein Kabel oder ein Draht ist, dadurch gekennzeichnet, daß dieser Verhakungsdraht oder dieses Verhakungsband dieser Karkasse gebildet wird durch ein Verbundmaterial mit Matrix aus Aluminiumlegierung der Reihen 2000, 3000, 4000, 5000, 6000 oder 7000 und/oder dieses längliche Element dieser Bewehrung gebildet wird durch ein Verbundmaterial mit Matrix aus Aluminiumlegierung der Reihen 2000, 5000, 6000 oder 7000.

**20.** Leitung nach Anspruch 19, dadurch gekennzeichnet, daß sie eine Karkasse umfaßt, die gebildet wird durch ein Verhakungsband oder einen Verhakungsdraht aus Stahl oder einer Aluminiumlegierung.

**21.** Leitung nach Anspruch 19, dadurch gekennzeichnet, daß diese Bewehrung Stahl umfaßt oder eine Verbindung aus Aluminiumlegierung ist.

**22.** Leitung nach Anspruch 1, dadurch gekennzeichnet, daß diese zugbeständige Bewehrung im wesentlichen Stahl umfaßt und diese gewölbte Ausbildung im wesentlichen ein Verbundmaterial mit Matrix aus Aluminiumlegierung umfaßt.

**23.** Leitung nach Anspruch 1, dadurch gekennzeichnet, daß diese druckbeständige Bewehrung oder gewölbte Ausbildung im wesentlichen Stahl umfaßt und daß diese zugbeständige Bewehrung im wesentlichen ein Verbundmaterial mit Matrix aus Aluminiumlegierung umfaßt.

**24.** Leitung nach einem der Ansprüche 22 oder 23, dadurch gekennzeichnet, daß sie eine reibungsvermindernde Hülle und vorzugsweise eine solche, die dicht und elektrisch isolierend ist, zwischen gewölbter Ausbildung und zugbeständiger Bewehrung umfaßt.

**25.** Leitung nach Anspruch 1, dadurch gekennzeichnet, daß diese zugbeständige Bewehrung und diese gewölbte Ausbildung im wesentlichen ein Verbundmaterial mit Matrix aus Aluminiumlegierung der Reihe 2000, 3000, 5000, 6000 oder 7000 umfaßt.

**26.** Leitung nach einem der vorhergehenden Ansprüche, dadurch gekennzeichnet, daß sie ein äußeres Band oder äußeren Verhakungsdraht umfaßt, der gegebenenfalls durch Verbundmaterial mit Matrix aus Aluminiumlegierung zusammengesetzt ist.

**27.** Leitung nach einem der vorhergehenden Ansprüche, dadurch gekennzeichnet, daß sie eine druckbeständige Bewehrung umfaßt, die wenigstens eine Bahn aufweist, die gebildet ist aus einem Profil mit gegebenenfalls einrastbarer Querschnittsgestalt, beispielsweise Zeta-Gestalt oder einer "U"-Gestalt, die hergestellt ist ausgehend von einem Verbundmaterial mit Matrix aus Aluminiumlegierung der Reihe 2000, 5000, 6000 oder 7000.

**28.** Vefahren zum Herstellen eines länglichen Elements, das sich aus einem Verbundmaterial mit Matrix aus Aluminiumlegierung zusammensetzt, welches zur Herstellung einer bewährten, flexiblen Leitung nach einem der vorhergehenden Ansprüche bestimmt ist, dadurch gekennzeichnet, daß dieses Material erhalten wird durch Einarbeitung von Verstärungselementen durch Verrühren in eine Aluminiumlegierung im halbpastenförmigen oder flüssigen Zustand und durch einen Warmverdichtungsvorgang dieses Verbundmaterials durch Walzen oder Fließpressen.

29. Verfahren nach Anspruch 28, dadurch gekennzeichnet, daß diese Einarbeitung von Verstärkungselementen in dem Augenblick vorgenommen wird, wo die Aluminiumlegierung aus dem Schmelzofen austritt und wo sie in eine gestaltgebende Nut vergossen wird.

30. Verfahren nach einem der Ansprüche 28 oder 29, dadurch gekennzeichnet, daß der Vorgang des Walzens oder Fließpressens vorgenommen wird bei einer Temperatur zwischen 150 und 500°C.

## Claims

1. Armoured flexible pipe having one or more of the following components, an armouring resistant to pressure (3), an armouring resistant to traction (5) and/or an inner casing (1), characterised in that at east one of the said components includes one or more elongate elements such as a profiled section, cable, wire or strip, the said element being composed of a composite material with an aluminium alloy matrix including reinforcement elements consisting of particles and/or whiskers of alumina or silicon carbide used in a proportion by weight of less than 40%, in that the particles used have a size of between 4 and 400 μm, in that the whiskers used have a diameter of 0.01 to 10 μm and a length of 10 to 600 μm, in that the said elongate element has a tensile strength (Rm) of at least 300 MPa and preferably at least 350 MPa, and in that the Young's modulus of the said elongate element is greater than 75,000 MPa (7560 kg/mm$^2$).

2. Pipe according to Claim 1, characterised in that the said composite has a matrix of aluminium alloy in the 2000, 5000, 3000, 6000 or 7000 series.

3. Pipe according to one of Claims 1 or 2, characterised in that the said proportion is between 3 and 25%.

4. Pipe according to one of Claims 1 to 3, characterised in that the particles have a size of between 10 and 200 μm.

5. Pipe according to one of Claims 2 to 4, having an armouring resistant to pressure (3) and/or armouring resistant to traction (5), characterised in that at least one of the said armourings includes at least one elongate element composed of a composite with a matrix of aluminium alloy in one of the 2000, 3000, 5000, 6000 or 7000 series and preferably in one of the following grades: 2014, 2017, 2024, 2117, 2124, 2618, 5050, 5052, 5056, 5082, 5086, 5154, 5183, 5754, 6005, 6060, 6061, 6063, 6066, 6070, 6081, 6082, 6181, 6351, 7001, 7020, 7049, 7050, 7075, 7090, 7091, 7175, 7178 or 7475.

6. Pipe according to Claim 1, having an inner casing (1), characterised in that the said casing includes at least one elongate element composed of a composite with a matrix of aluminium alloy in one of the series: 1000, 2000, 3000, 4000, 5000, 6000, 7000 and preferably one of the grades: 1100, 1180, 3103, 5050, 5052, 5056, 5083, 5456, 6060, 6061, 6082, 6083 or 6106.

7. Pipe according to one of Claims 1 to 5, having a casing (1), characterised in that the said casing includes at least one elongate element composed of a composite with an aluminium alloy matrix having a tensile strength (Rm) of at least 200 MPa and preferably at least 250 MPa and an elastic limit at 0.2% $Re_{0.2}$ of at least 150 MPa and preferably at least 190 MPa.

8. Pipe according to one of the preceding claims, characterised in that it has an inner casing including at least one elongate element composed of a composite material with an aluminium alloy matrix, the said elongate element being a dovetailable or interlockable profiled section or wire.

9. Pipe according to Claim 6, characterised in that the said elongate element is of the "Zeta" type (9).

10. Pipe according to Claims 1 to 8, characterised in that the elongate element has undergone a hot rolling or extrusion operation.

11. Pipe according to Claim 1 to 10, in which the reinforcement elements are introduced by being added, under constant agitation, to the aluminium alloy in the viscous or liquid state.

12. Pipe according to Claim 8, characterised in that the said elongate element formed from the said composite material with an aluminium alloy matrix has undergone a work-hardening operation during the final treatment preceded and/or followed by tempering.

13. Pipe according to one of Claims 1 to 12, characterised in that the said elongate element has undergone cold-working to an extent of at least 3% in the case of the use of an aluminium alloy in the 2000, 6000 or 7000 series, or an extent of at least 10% in the case of the use of an aluminium alloy in the 5000 series.

14. Pipe according to one of Claims 1 to 12, characterised in that the said elongate element has undergone cold-working to an extent of between 3 and 40% and preferably between 5 and 20% in the case of the use of a composite with a matrix of aluminium alloy in the 2000, 6000 or 7000 series.

15. Pipe according to one of Claims 1 to 12, characterised in that the said elongate element has undergone cold-working to an extent of between 20 and 90% and preferably between 10 and 60% in the case of the use of a 5000 series aluminium alloy composite.

16. Pipe according to one of the preceding claims, characterised in that the said elongate element has undergone cold rolling or drawing.

17. Pipe according to Claim 13, characterised in that the said elongate element has undergone partial or total annealing or a quenching and tempering operation the characteristic parameters of which are a function of the said work-hardening content and/or the nature of the alloy.

18. Pipe according to one of Claims 1 to 14, characterised in that the said component including the aluminium composite material is covered with a corrosion protection alloy.

19. Pipe according to one of the preceding claims, having a casing, sheath and armouring, the said casing including an interlocking strip or a interlocking wire, particularly in Zeta form, and the said armouring including an element which is a profiled section, cable or wire, characterised in that the said interlocked wire or strip in the said casing is composed of a composite with a matrix of aluminium alloy in the 2000, 3000, 4000, 5000, 6000 or 7000 series, and/or the said elongate element in the said armouring is formed from a composite with a matrix of aluminium alloy in the 2000, 5000, 6000 or 7000 series.

20. Pipe according to Claim 19, characterised in that it includes a casing formed from a steel or aluminium alloy interlocking wire or strip.

21. Pipe according to Claim 19, characterised in that the said armouring comprises steel or is composed of aluminium alloy.

22. Pipe according to Claim 1, characterised in that the said armouring resistant to traction comprises essentially steel and the said vault comprises essentially a composite material with an aluminium alloy matrix.

23. Pipe according to Claim 1, characterised in that the said armouring resistant to pressure or vault comprises essentially steel and the said armouring resistant to traction comprises essentially a composite material with an aluminium alloy matrix.

24. Pipe according to one of Claims 22 or 23, characterised in that it includes an anti-friction sheath, which preferably is watertight and electrically insulating, between the vault and the armouring resistant to traction.

25. Pipe according to Claim 1, characterised in that the said armouring resistant to traction and the said vault comprise essentially a composite material with a matrix of aluminium alloy in the 2000, 3000, 5000, 6000 or 7000 series.

26. Pipe according to one of the preceding claims, characterised in that it comprises an outer strip or outer interlocking wire, optionally composed of a composite with an aluminium alloy matrix.

27. Pipe according to one of the preceding claims, characterised in that it includes an armouring resistant to pressure having at least one layer formed from a profiled section optionally having a cross section with an interlockable shape, such as a Zeta, or a "U", produced from a composite with a matrix of aluminium alloy in the 2000, 5000, 6000 or 7000 series.

28. Method of manufacturing an elongate element composed of a composite material with an aluminium alloy matrix intended for the manufacture of an armoured flexible pipe according to one of the preceding claims, characterised in that the said material is obtained by incorporating reinforcement elements by stirring into an aluminium alloy in the semi-viscous or liquid state and by an operation consisting of hot compacting of the said composite material by rolling or drawing.

**29.** Method according to Claim 28, characterised in that the said incorporation of reinforcing elements is effected when the said aluminium alloy emerges from the melting furnace and when it is poured into a forming channel.

**30.** Method according to one of Claims 28 or 29, characterised in that the rolling or drawing operation is carried out at a temperature of between 150 and 500°C.

FIG.1
7
6
5
4
3
2
1

FIG.2
8

12
FIG.3
11
10
9
16
13
19
FIG.4
17
14
18
15
16